# FASCICULE DE BREVET EUROPEEN

(11) **EP 2 205 890 B1**
(45) Date de publication et mention de la délivrance du brevet: **31.08.2011**
(21) Numéro de dépôt: 08870560.3
(22) Date de dépôt: 09.10.2008
(51) Int. Cl.: F16F 9/00, B62K 25/08, B62K 25/28

(54) **DISPOSITIF DE CONTROLE D'UN DISPOSITIF AMORTISSEUR HYDRAULIQUE DE SUSPENSION**
VORRICHTUNG ZUR STEUERUNG EINES HYDRAULISCHEN STOSSDÄMPFERS VON EINER AUFHÄNGUNG
DEVICE FOR CONTROLLING A HYDRAULIC SHOCK-ABSORBER OF A SUSPENSION

(30) Priorité: 09.10.2007 FR 0707071
(43) Date de publication de la demande: 14.07.2010
(73) Titulaire: Crasset, Dominique, La Cour Marigy (FR)
(72) Inventeur: Crasset, Dominique, La Cour Marigy (FR)
(74) Mandataire: Debay, Yves
(86) Numéro de dépôt international: PCT/FR2008/001413
(87) Numéro de publication internationale: WO 2009/090328

(56) Documents cités:
- EP-A- 1 234 760
- US-A- 5 320 375
- US-A1- 2001 030 408
- US-A1- 2004 069 073
- US-B1- 6 767 024

## Description

La présente invention se rapporte au domaine des dispositifs des amortisseurs de suspension et plus particulièrement au domaine des dispositifs de contrôle du fonctionnement des amortisseurs de suspension de véhicules cyclistes.

Le brevet FR2809177 se rapporte à un dispositif associé à un détecteur d'effort de pédalage ou de tension de chaine, le détecteur d'effort venant se positionner au niveau du pédalier d'un véhicule cycliste. Ce détecteur d'effort relié à une suspension autorégulatrice permet de contrôler et de régler la raideur de la suspension par l'intermédiaire d'un moyen de commande. En fonction de la détection réalisée au niveau du pédalier, le déplacement du piston de l'amortisseur de suspension peut être bloqué pour faciliter le pédalage par le cycliste. Le dispositif de commande du fonctionnement de l'amortisseur comprend un moyen de régulation du passage du fluide hydraulique dans une chambre de l'amortisseur en contact avec un gaz de compensation. Cette régulation se fait en contrôlant l'ouverture d'un orifice au moyen d'une valve formée par un cylindre monté rotatif selon un axe perpendiculaire à l'axe de l'orifice, le cylindre comprenant un alésage perpendiculaire à son axe et aligné avec l'orifice qu'il régule. La rotation du cylindre entraine le décalage de son alésage avec l'axe de l'orifice et réduit voir bloque le passage de fluide. Cette rotation est contrôlée depuis le détecteur par un câble relié à un levier monté sur le cylindre de la valve sur le coté de l'amortisseur et associé à au moins un élément élastique déformable monté sur le cadre du véhicule pour permettre le retour du levier et de la valve dans une position de repos. Cependant, un tel dispositif de commande d'un amortisseur de suspension présente comme inconvénients d'une part d'augmenter le volume occupé par l'amortisseur en étant positionné sur le coté de l'amortisseur et d'autre part d'être composé de différents éléments disposés respectivement sur des structures différentes, compliquant les opérations de montage du dispositif sur le véhicule.

D'autes dispositifs sont divulgués dans les documents US-A-5320375, EP-A-1234 760, US-B-6767024 et US-A-20040069073.

La présente invention a pour objet de palier un ou plusieurs inconvénients de l'art antérieur et notamment de proposer un nouveau dispositif de contrôle d'un amortisseur de suspension dont le montage sur le véhicule est facilité et dont l'intégration à certains élément de l'amortisseur permet de réduire le volume occupé par celui-ci.

Cet objectif est atteint grâce à un dispositif de contrôle d'un dispositif amortisseur de suspension monté sur le cadre d'un véhicule cycliste et commandé via au moins un câble par un détecteur d'effort de pédalage ou de tension de chaine monté sur un pédalier du véhicule, un amortisseur hydraulique de suspension étant monté entre au moins deux parties du cadre du véhicule montées mobiles entre elles et/ou associées à un élément de ressort monté avec l'amortisseur, l'amortisseur hydraulique comprenant :
- un volume fixé à une première des deux parties du cadre et intégrant une partie hydraulique avec deux chambres séparées par la paroi mobile d'un piston présentant au moins un orifice pour le passage d'un fluide depuis une chambre vers une autre,
- un gaz séparé de la partie hydraulique par une paroi mobile,
- une tige du piston dont une première extrémité est fixée à la paroi mobile du piston et dont la seconde extrémité est fixée sur la seconde des deux parties du cadre,
caractérisé en ce que la paroi mobile du piston est munie d'une valve dont l'ouverture, commandée par le détecteur d'effort de pédalage ou de tension, gère le passage de fluide depuis une chambre de la partie hydraulique vers une autre,
et en ce que la valve est actionnée, au niveau du dispositif amortisseur de suspension, par un dispositif d'actionnement dont une extrémité est fixée au câble du détecteur de pédalage, le dispositif d'actionnement se déplaçant entre au moins deux positions, une première position ouvrant la valve et une seconde position refermant la valve lors de la détection d'un effort de pédalage déterminé, le câble du détecteur débouchant de sa gaine au niveau d'un support monté sur le dispositif amortisseur de suspension et/ou sur le cadre du véhicule, **au moins un élément élastique est associé au câble de façon à s'opposer à la force de traction** du câble sur le dispositif d'actionnement, pour permettre une action antagoniste à la traction du câble et revenir dans une position ouvrant au moins partiellement la valve et autorisant le passage d'un fluide depuis une chambre vers une autre.

Selon une variante de réalisation, le dispositif de contrôle d'un amortisseur de suspension est caractérisé en ce que les deux positions qui limitent l'amplitude du fonctionnement du dispositif d'actionnement sont définies par des butées disposées sur la structure du dispositif amortisseur ou d'un élément du dispositif amortisseur pour restreindre d'une part le déplacement d'au moins un élément mobile du dispositif amortisseur, et d'autre part l'amplitude d'actionnement du détecteur d'effort de pédalage.

Selon une autre variante de réalisation, le dispositif de contrôle d'un amortisseur de suspension est caractérisé en ce que le dispositif d'actionnement comprend un levier pivotant entre au moins deux positions, une première position ouvrant la valve et une seconde position refermant la valve lors de la détection d'un effort de pédalage déterminé, le câble du détecteur débouchant de sa gaine au niveau d'un support monté sur le dispositif amortisseur de suspension et/ou sur le cadre du véhicule, au moins un élément élastique s'oppose à la force de traction du câble sur le levier, pour permettre une action antagoniste à la traction du câble sur le levier et revenir dans une position ouvrant au moins partiellement la valve et autorisant le passage d'un fluide depuis une chambre vers une autre.

Selon une autre variante de réalisation, le dispositif de contrôle d'un amortisseur de suspension est caractérisé en ce que la tige du piston étant creuse, le dispositif de contrôle présente une valve qui comprend au moins :
- un premier élément creux dans sa longueur et positionné dans la longueur de la tige creuse du piston, fixé à la paroi interne de la tige creuse du piston et dont un prolongement dans une des chambres de l'amortisseur forme au moins une partie de la paroi mobile du piston, ce prolongement au niveau de la paroi mobile supportant au moins un orifice pour le passage d'un fluide depuis une chambre de l'amortisseur vers une autre,
- un second élément positionné dans la longueur et contre la paroi interne du premier élément creux, monté mobile par rapport au premier élément creux de façon à permettre au moins une rotation axiale et/ou une translation axiale selon l'axe de la tige du piston et des deux éléments de la valve, et dont un prolongement dans une des chambres de l'amortisseur forme au moins une partie de la paroi mobile du piston et comprend au moins un orifice mobile pour contrôler le passage d'un fluide depuis une chambre de l'amortisseur vers une autre,
de sorte qu'un glissement du prolongement du second élément de la valve sur le prolongement du premier élément de la valve permet un alignement ou un décalage des orifices respectifs pour respectivement autoriser le passage d'un fluide depuis une chambre de l'amortisseur vers une autre ou bloquer ce passage.

Selon une autre variante de réalisation, le dispositif de contrôle d'un amortisseur de suspension est caractérisé en ce que au moins un élément élastique est positionné entre le support et au moins un élément du dispositif d'actionnement.

Selon une autre variante de réalisation, le dispositif de contrôle d'un amortisseur de suspension est caractérisé en ce que la fixation de la gaine du câble sur le support fait intervenir un élément de réglage de la position de l'élément élastique formé par une tige filetée creuse montée dans un perçage taraudé du support et traversée par le câble, une extrémité de la tige filetée creuse se trouvant en appui contre l'extrémité d'un élément élastique dont l'extrémité opposée reçoit un élément fixé au câble, la position de la tige filetée creuse dans le perçage taraudé étant susceptible d'être réglée pour définir une précharge de la force de l'élément élastique qui s'oppose à la tension du câble sur le levier.

Selon une autre variante de réalisation, le dispositif de contrôle d'un amortisseur de suspension est caractérisé en ce que au moins un élément élastique est positionné le long du câblage qui relie le détecteur d'effort de pédalage à au moins un élément du dispositif d'actionnement d'au moins un amortisseur de suspension.

Selon une autre variante de réalisation, le dispositif de contrôle d'un amortisseur de suspension est caractérisé en ce que le câblage est formé d'une première longueur de câble relié au détecteur d'effort de pédalage et au moins une seconde longueur de câble relié au dispositif d'actionnement d'au moins un amortisseur de suspension, la première longueur de câble est connecté avec au moins une seconde longueur de câble au niveau d'un élément de sertissage monté coulissant dans une cartouche monté fixe avec la gaine du câblage, l'élément élastique étant logé dans la cartouche entre une extrémité de la cartouche et l'élément de sertissage de façon à s'opposer à la force de traction du câble sur le dispositif d'actionnement.

Selon une autre variante de réalisation, le dispositif de contrôle d'un amortisseur de suspension est caractérisé en ce que la cartouche fixée à la gaine du câblage est arrangée de sorte que sa longueur puisse être réglée de façon à définir une précharge de la force de l'élément élastique qui s'oppose à la tension du câble.

Selon une autre variante de réalisation, le dispositif de contrôle d'un amortisseur de suspension est caractérisé en ce que l'élément de sertissage connecte la première longueur de câble d'une part avec une seconde longueur de câble pour transmettre l'action du détecteur d'effort de pédalage à au moins un élément du dispositif d'actionnement d'un amortisseur de suspension monté à un premier point du véhicule cycliste et d'autre part avec une troisième longueur de câble pour transmettre l'action du détecteur d'effort de pédalage à au moins un élément du dispositif d'actionnement d'un amortisseur de suspension monté à un second point du véhicule cycliste.

Selon une autre variante de réalisation, le dispositif de contrôle d'un amortisseur de suspension est caractérisé en ce que le dispositif comprend au moins deux éléments élastiques, chacun ayant une extrémité fixée au niveau de l'élément de sertissage coulissant,
- un premier élément élastique, dit « mou » et adapté pour s'opposer à la force de traction du câble sur le dispositif d'actionnement avec un premier coefficient de résistance à la compression et permettre un retour du câble en absence de traction sur le câble, est positionné de sorte que sa seconde extrémité soit en appui direct ou indirect contre une extrémité de la cartouche et
- un second élément élastique, dit « dur » et adapté pour s'opposer à la force de traction du câble sur le dispositif d'actionnement avec un second coefficient de résistance à la compression, positionné de sorte que sa seconde extrémité soit libre et appuie directement ou indirectement contre une extrémité de la cartouche lorsque le câble subit une force de traction.

Selon une autre variante de réalisation, le dispositif de contrôle d'un amortisseur de suspension est caractérisé en ce que, la cartouche étant formée par une première demi-cartouche insérée dans une seconde demi-cartouche, le dispositif comprend un élément de guidage d'au moins une bille logée dans une cavité d'une face de l'élément de guidage, l'élément de guidage étant monté fixe en pivotement et coulissant en translation avec une première demi-cartouche selon l'axe de la cartouche et mobile en pivotement avec la seconde demi-cartouche de sorte que, l'élément de guidage mis en pression par au moins un élément élastique contre l'extrémité intérieure de la seconde demi-cartouche au niveau de la face opposée à la face qui intègre la bille est maintenue fixe en translation avec la seconde demi-cartouche au niveau d'au moins une bille qui se positionne successivement dans un forage parmi une pluralité de forages disposée circulairement à l'extrémité intérieure de la demi-cartouche, lors du réglage d'une précharge par pivotement d'une des demi-cartouches par rapport à l'autre.

Selon une autre variante de réalisation, le dispositif de contrôle d'un amortisseur de suspension est caractérisé en ce qu'un ressort de torsion se trouve positionné sur le dispositif amortisseur de suspension avec au moins une de ses extrémités montées contre une saillie du levier de façon à s'opposer à la force de traction du câble sur le levier et de permettre au levier de revenir dans une position autorisant au niveau du piston le passage d'un fluide depuis une chambre vers une autre.

Selon une autre variante de réalisation, le dispositif de contrôle d'un amortisseur de suspension est caractérisé en ce que le ressort de torsion est monté enroulé autour de l'extrémité du second élément de la valve qui dépasse du premier élément de la valve et de la tige du piston, une première extrémité du ressort, mobile avec le levier, est positionné contre une saillie du levier et la seconde extrémité, fixe par rapport à la structure du dispositif amortisseur de suspension, est positionnée et/ou coincée et/ou fixée contre un appui formé par la structure de l'amortisseur.

Selon une autre variante de réalisation, le dispositif de contrôle d'un amortisseur de suspension est caractérisé en ce que la seconde extrémité fixe du ressort de torsion prend appui contre un élément réglable formé par une vis de précharge positionnée dans le perçage taraudé d'un support monté sur la structure du dispositif amortisseur et dont une extrémité de la vis de précharge forme une butée réglable pour définir la force du ressort de torsion qui s'oppose à la tension du câble sur le levier.

Selon une autre variante de réalisation, le dispositif de contrôle d'un amortisseur de suspension est caractérisé en ce que la paroi mobile du piston comprend au moins deux niveaux superposés, un premier niveau comprenant au moins un orifice associé à au moins un clapet monté en détente et/ou en compression pour contrôler respectivement les phases de détente et/ou de compression de l'amortisseur et un second niveau comprenant au moins un orifice dont le passage de fluide est contrôlé par le premier et le second élément de la valve.

Selon une autre variante de réalisation, le dispositif de contrôle d'un amortisseur de suspension est caractérisé en ce que le débattement du levier est un pivotement dans un plan sensiblement perpendiculaire à l'axe de la tige du piston et des éléments de la valve et autour d'un pivot, auquel le levier est fixé, formé par le second élément de la valve, le débattement étant limité par au moins une butée montée réglable sur un élément de la structure du dispositif amortisseur définissant un seuil de débattement maximum et/ou minimum qui correspond respectivement à une position « de tension maximum du câble » et/ou à une position « de tension minimum du câble ».

Selon une autre variante de réalisation, le dispositif de contrôle d'un amortisseur de suspension est caractérisé en ce que le débattement du levier est un pivotement dans un plan sensiblement parallèle à l'axe de la tige du piston et des éléments de la valve, le pivot du levier s'articulant avec le second élément de la valve par un dispositif de renvoi d'angle et le débattement étant limité par au moins une butée montée réglable sur un élément de la structure du dispositif amortisseur définissant un seuil de débattement maximum et/ou minimum qui correspond respectivement à une position « de tension maximum du câble » et/ou à une position « de tension minimum du câble ».

Selon une autre variante de réalisation, le dispositif de contrôle d'un amortisseur de suspension est caractérisé en ce que le débattement du levier est un pivotement dans un plan sensiblement parallèle à l'axe de la tige du piston et des éléments de la valve, et en ce que, l'extrémité du second élément de la valve étant fixé mobile au levier, le câble est fixé sur le levier au niveau d'un point de fixation décalé par rapport à l'axe de translation du second élément de la valve de sorte que le câble ne s'aligne pas avec l'axe des éléments de la valve, le câble et le second élément de la valve se trouvant orienté dans des directions opposées de part et d'autre du levier.

Selon une autre variante de réalisation, le dispositif de contrôle d'un amortisseur de suspension est caractérisé en ce que le second élément étant mobile en translation axiale, un ressort à rondelle ou une rondelle « Belleville » est monté sur la face du piston opposée à la tige de sorte que l'extrémité du second élément mobile de la valve est fixé au centre du ressort rondelle et qu'un écrasement du ressort rondelle génère une force d'opposition à la force de tension du câble sur le levier.

Selon une autre variante de réalisation, le dispositif de contrôle d'un amortisseur de suspension est caractérisé en ce que le câble du détecteur sortant de sa gaine au niveau du dispositif amortisseur de suspension pour se fixer à une extrémité du levier, se prolonge hors du dispositif amortisseur pour entrer dans une nouvelle gaine et rejoindre un second dispositif amortisseur de suspension du véhicule, les extrémités des gaines au niveau des dispositifs amortisseurs de suspension étant maintenues en place par des tiges filetées creuses.

L'invention, avec ses caractéristiques et avantages, ressortira plus clairement à la lecture de la description faite en référence aux dessins annexés dans lesquels :

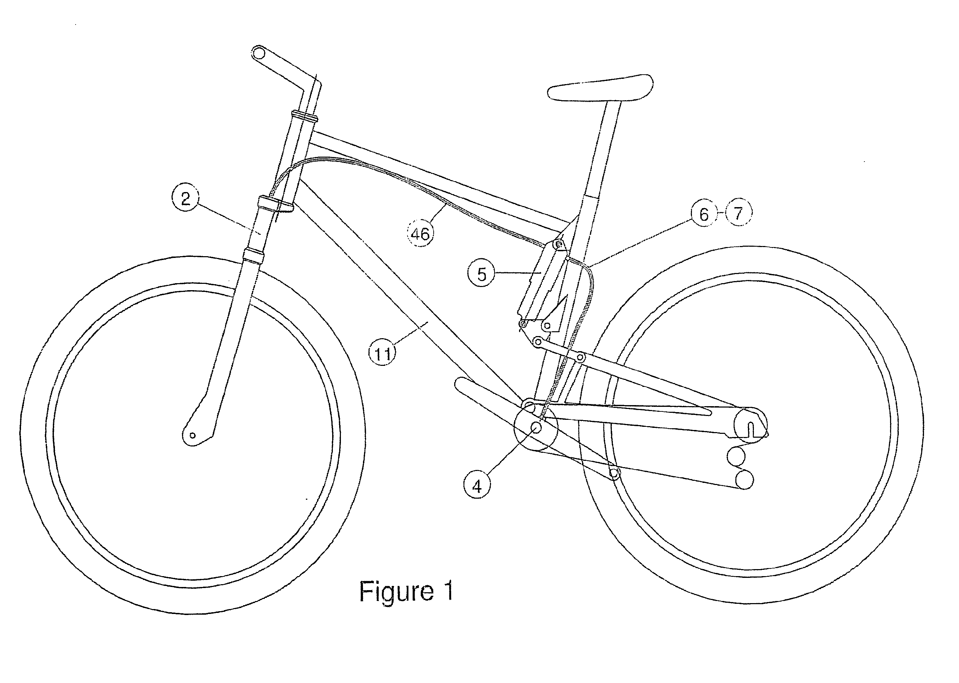

- la figure 1 représente schématiquement un exemple de vue latérale d'un véhicule cycliste équipé du dispositif de régulation d'un amortisseur de suspension de l'invention,

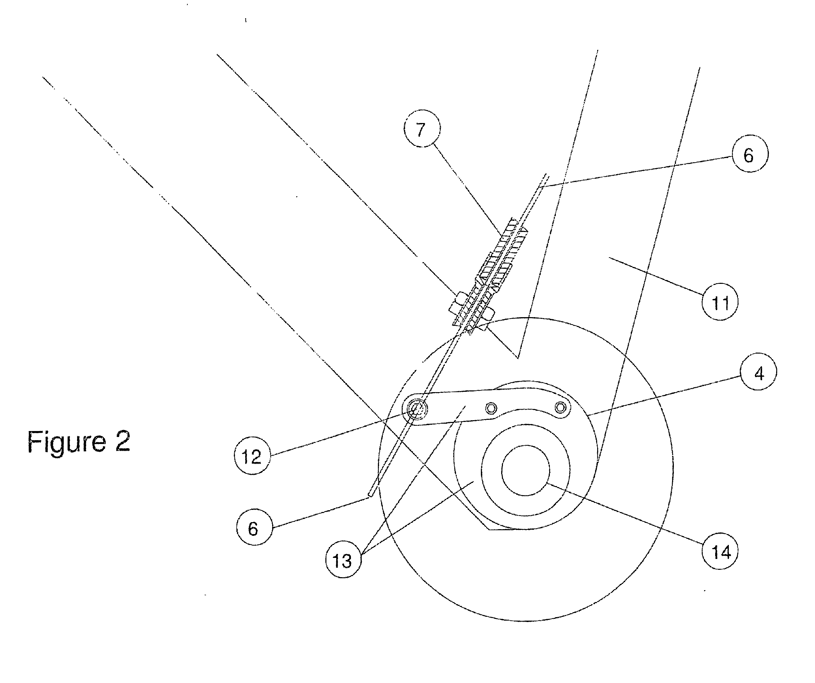

- la figure 2 représente schématiquement un exemple de dispositif de détecteur d'effort de pédalage ou de tension de chaine monté sur un pédalier du véhicule,

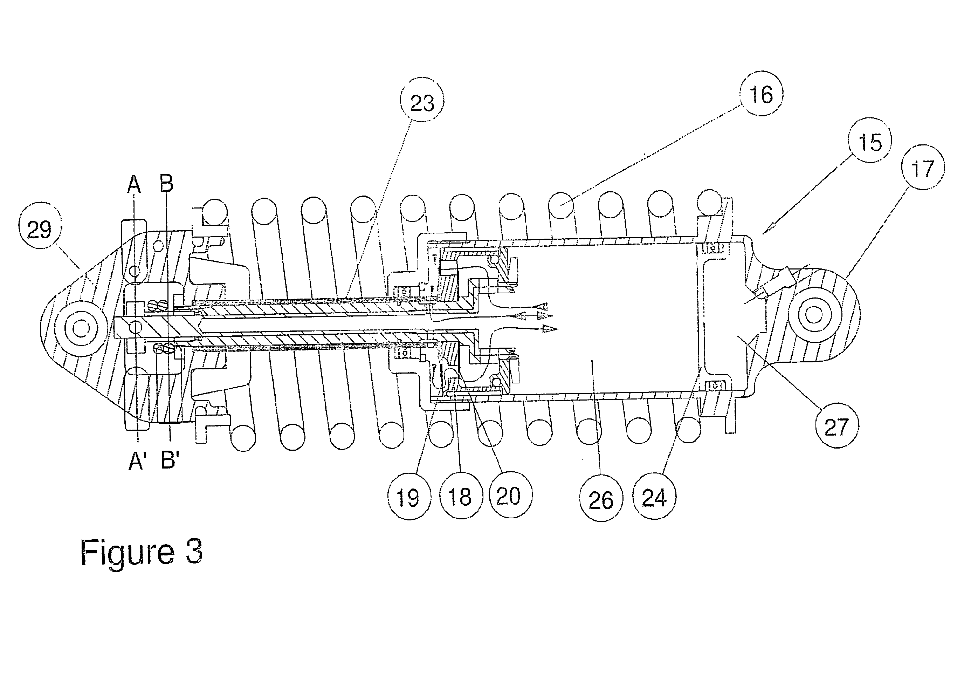

- la figure 3 représente schématiquement un exemple de vue en coupe d'un amortisseur de suspension,

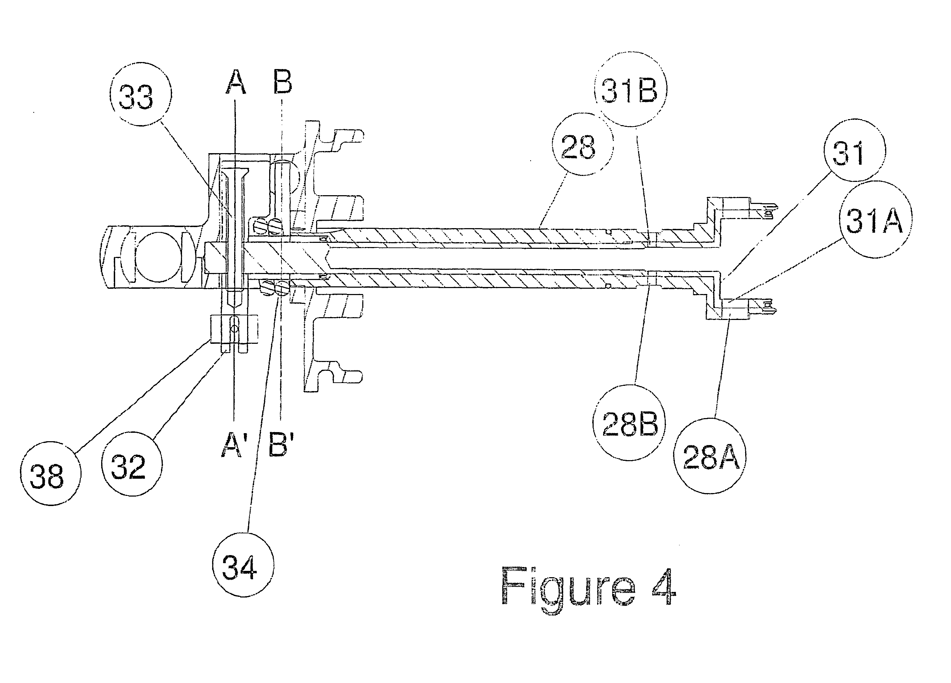

- la figure 4 représente schématiquement une vue d'un détail du dispositif de contrôle de l'amortisseur, la vue étant en coupe selon un plan passant par l'axe de l'amortisseur et selon un angle de 90° par rapport au plan de coupe de la figure 3,

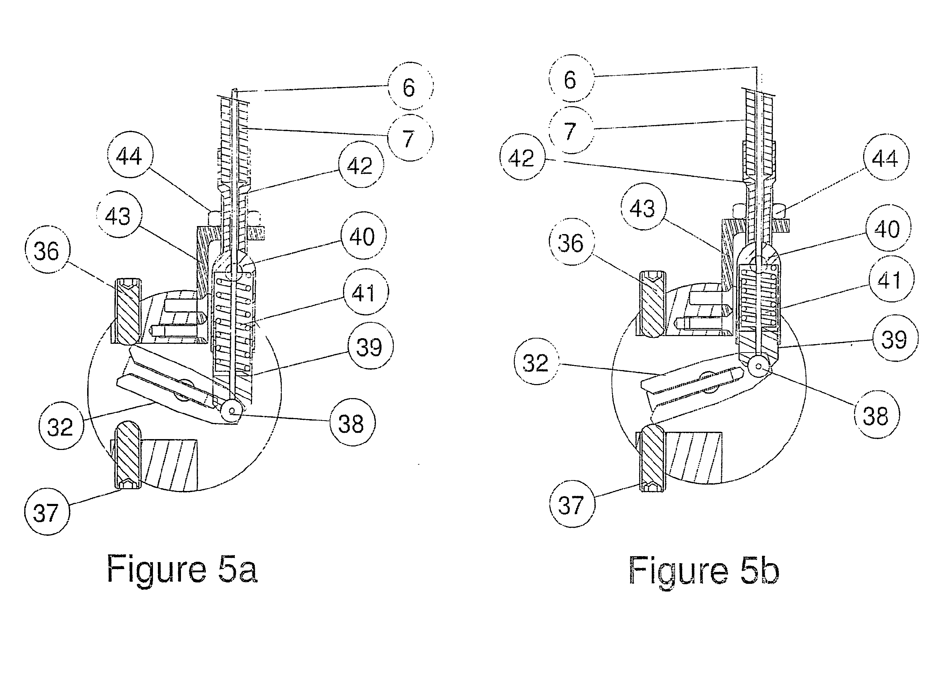

- les figures 5a et 5b représentent schématiquement un exemple de fonctionnement du câble avec le levier selon une vue depuis une extrémité de l'amortisseur d'une coupe perpendiculaire à l'axe de l'amortisseur et passant par l'axe (AA') du levier,

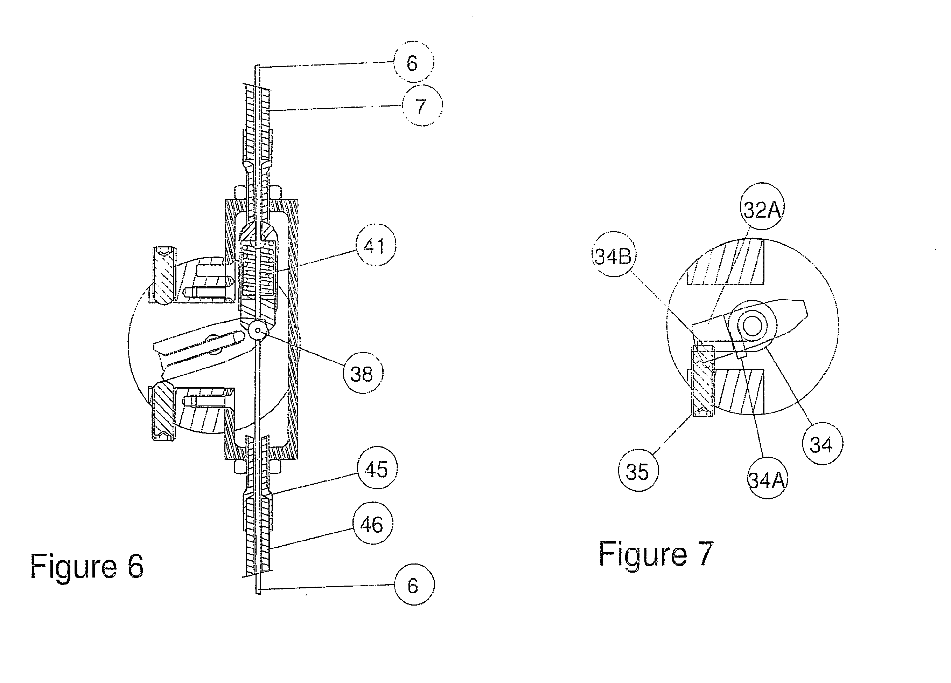

- la figure 6 représente schématiquement une variante de réalisation de la fixation du câble sur le levier, le câble participant au contrôle d'un autre amortisseur,
- la figure 7 représente schématiquement un détail du dispositif une vue de dessous d'une coupe perpendiculaire à l'axe de l'amortisseur et passant par le plan (BB') du ressort de torsion,

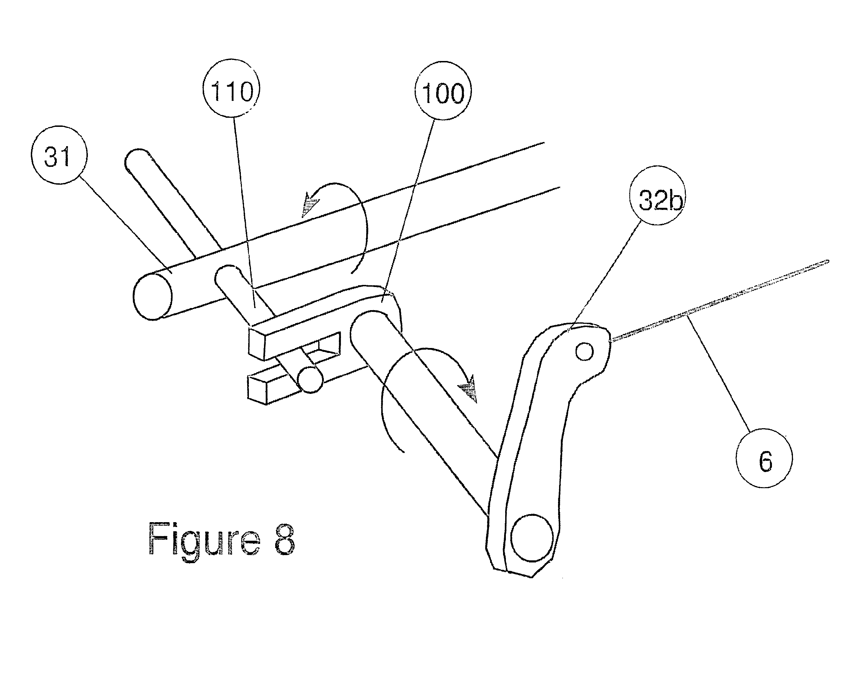

- la figure 8 représente schématiquement un exemple de dispositif de renvoi d'angle susceptible d'être utilisé dans le dispositif d'actionnement de l'invention,

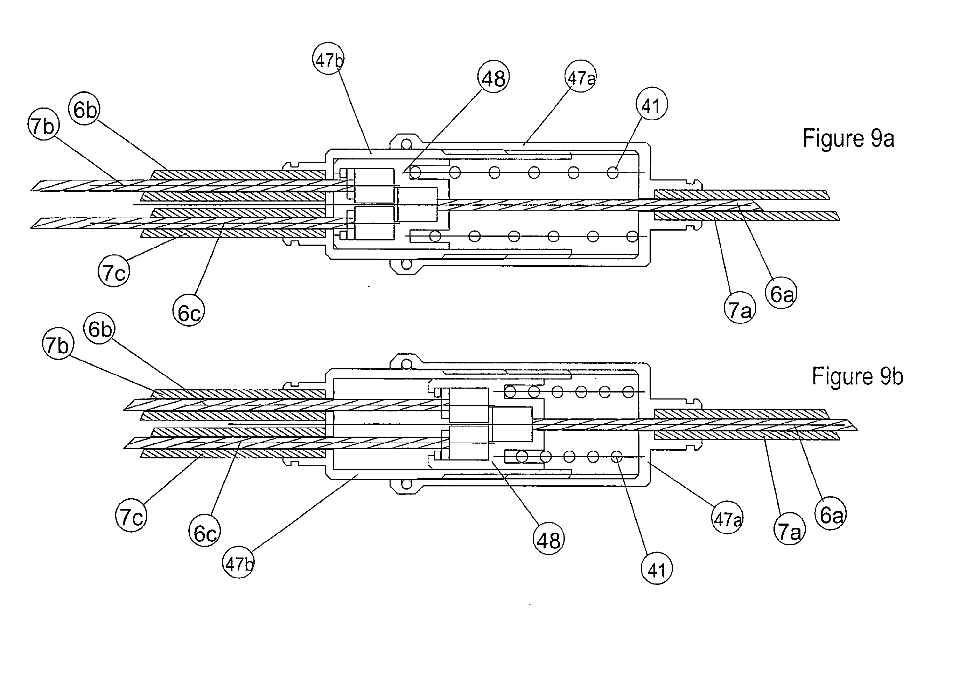

- les figures 9a et 9b représentent schématiquement un exemple de réalisation d'une cartouche positionnant un moyen élastique sur le câblage d'actionnement de l'amortisseur, la figure 9a présentant le moyen élastique en extension, la figure 9b présentant le moyen élastique en compression,
- les figures 10a, 10a1, 10a2 et 10b représentent schématiquement un exemple de réalisation d'une cartouche intégrant plusieurs moyens élastiques sur le câblage d'actionnement de l'amortisseur et muni d'un moyen de réglage de la précharge, parmi lesquelles :

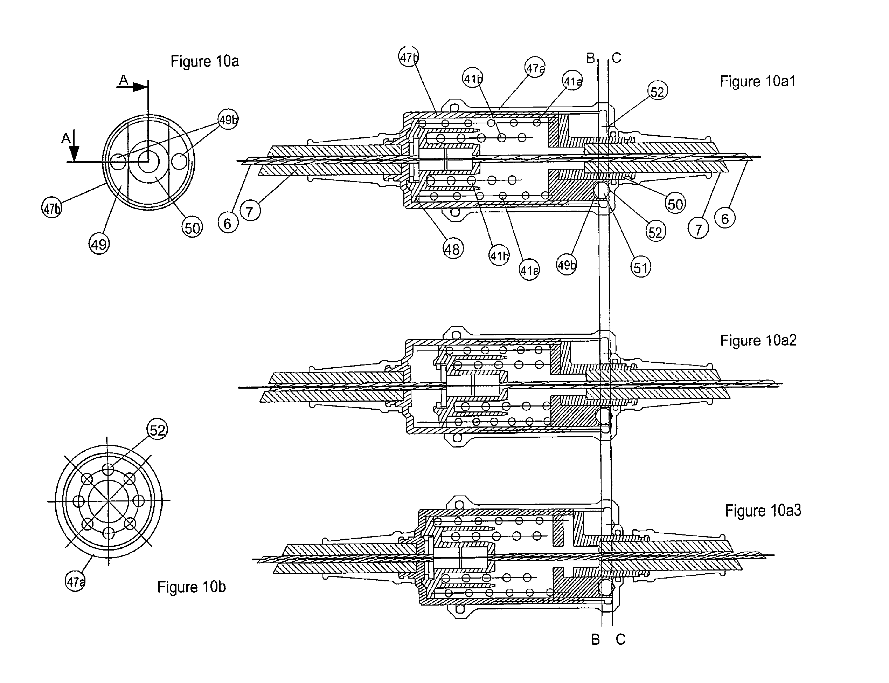

   - la figure 10a présente une section de la cartouche dans un plan B perpendiculaire à l'axe de la cartouche et passant par des épaulements qui portent les cavités de logement de billes,
   - les figures 10a1 et 10a2 présente une projection plane d'une section A-A de la cartouche passant par deux plans perpendiculaires entre eux et comprenant l'axe de la cartouche, le moyen élastique étant respectivement en compression et en extension,
   - la figure 10a3 présente une projection de la cartouche semblable aux figures 10a1 et 10a2, le réglage de la précharge étant modifié par diminution de la longueur de la cartouche,
   - la figure 10b présente une section de la cartouche dans un plan C perpendiculaire à l'axe de la cartouche et passant par les forages d'une des demi-cartouches destinés à recevoir une bille de l'élément de guidage.

Le dispositif de l'invention concerne un dispositif de contrôle d'un dispositif amortisseur de suspension (2, 5) monté sur le cadre d'un véhicule cycliste. Ce dispositif de contrôle est commandé par un câble (6) qui coulisse dans une gaine (7) montée et stoppée plus ou moins directement sur le cadre (11) du véhicule depuis un détecteur (13) d'effort de pédalage ou de tension de chaine monté sur un pédalier (4) particulier du véhicule. Le positionnement des câbles (6) et de leurs gaines (7) respectives sur le cadre (11) du véhicule et/ou au niveau d'au moins un amortisseur de suspension est réalisé par des tiges filetées creuses (42, 45) traversée par le câble (6) et dont une extrémité de la tige filetée creuse (42, 45) présente un alésage élargi dans lequel vient se positionner une extrémité de la gaine (7), la tige filetée creuse (42, 45) prolongeant la gaine (7) dans le guidage du câble (6). La tige filetée creuse (42, 45) est également maintenue en position sur un élément de support (43) de l'amortisseur de suspension grâce à un contre-écrou (44).

Le dispositif amortisseur de suspension (5) comprend un amortisseur hydraulique (15) accompagné éventuellement d'un ressort hélicoïdal (16), les extrémités de chacun de ces deux éléments (15, 16) se trouvant fixées sur des parties du cadre (11) du véhicule montées mobiles l'une par rapport à l'autre, les parties du cadre (11) intégrant au moins un élément de suspension.

L'amortisseur hydraulique (15) comprend une première partie qui présente un volume (17), formant le corps de l'amortisseur (15), fixé à une première partie du cadre du véhicule, ce volume (17) renfermant un fluide liquide, par exemple de l'huile, dans lequel vient se positionner la paroi mobile d'un piston (18) qui sépare le volume (17) en deux chambres. La paroi mobile du piston (18) se prolonge par une tige (23) qui sort au niveau d'une des extrémités du volume (17) pour venir se fixer sur la seconde partie du cadre du véhicule.

Selon un mode de réalisation particulier, le volume (17) de l'amortisseur (15) comprend également une troisième chambre (27) comprenant du gaz sous pression, positionnée du coté opposé à la tige du piston (18) et séparée d'une des deux chambres par une paroi étanche mobile (24) pour jouer un rôle de compensation lors du déplacement de la paroi mobile du piston (18) entre les deux chambres de fluide.

La paroi mobile du piston (18) présente au moins un orifice permettant le passage du fluide depuis une des chambres vers une autre, l'ouverture de cet orifice se trouvant contrôlée par une valve de sorte que la fermeture de l'orifice par la valve empêche le passage du fluide d'une chambre à une autre et bloque le coulissement de la paroi mobile du piston (18) et donc le fonctionnement de l'amortisseur (15).

Selon un mode de réalisation particulier, la paroi mobile du piston (18) comprend un ou plusieurs clapets montés en détente (20) ou en compression (19) de part et d'autre d'au moins un orifice de la paroi mobile du piston (18) de façon à contrôler respectivement les phases de détente et de compression de l'amortisseur. Selon un mode de réalisation préféré, la combinaison de ces clapets (19, 20) avec la valve du dispositif de l'invention est faite par une paroi mobile du piston (18) qui présente un premier niveau comprenant au moins un orifice dont le passage de fluide est géré par des clapets (19, 20) en superposition avec un second niveau qui comprend au moins un orifice dont le passage de fluide est contrôlé par la valve du dispositif de l'invention.

La valve de l'amortisseur (15) comprend au moins deux éléments (28, 31) positionné dans la tige (23) du piston (18), la tige (23) du piston (18) formant un conduit creux dans toute sa longueur. Le premier élément (28) qui réalise le corps de la valve, présente une structure longiligne qui est positionnée à l'intérieur de la tige (23) du piston (18) de sorte que sa surface extérieure vienne se fixer contre la surface intérieure de la tige (23) du piston (18), le diamètre extérieur de la section du corps de valve (28) étant sensiblement identique au diamètre intérieur de la section de la tige (23) du piston (18). Une des extrémités du corps de la valve (28) se prolonge et déborde de la tige dans le volume (17) de l'amortisseur (15) pour rejoindre et participer à la formation de la paroi mobile du piston (18). Au niveau de cette paroi mobile, le corps de valve (28) présente un ou plusieurs orifices (28a) pour le passage du fluide d'une chambre du volume vers une autre. Le premier élément (28) de la valve forme également un conduit creux dans toute sa longueur et dans lequel se trouve positionné le second élément (31) de la valve qui tient le rôle de la valve proprement dite. Alors que le premier élément (28) de la valve est monté fixe par rapport à la tige (23) du piston (18), le second élément (31) est monté mobile par rapport au premier élément (28) de la valve et à la tige (23) du piston (18) de façon à pouvoir réaliser une rotation axiale et/ou une translation axiale selon l'axe commun à ces trois éléments (23, 28, 31) enchâssés les uns dans les autres. Le second élément (31) de la valve déborde du premier élément (28) et de la tige (23) au niveau de chacune de ses extrémités. Au niveau de l'extrémité qui se situe dans le volume (17) de l'amortisseur (15), le prolongement du second élément (31) de la valve rejoint la paroi mobile du piston (18) et la surface de ce prolongement se positionne contre celle du prolongement du premier élément (28) en présentant un ou plusieurs orifices (31a) disposés les uns par rapport aux autres de façon identiques à ceux (28a) du premier élément (28). Ainsi l'alignement ou le décalage des orifices (28a, 31 a) respectifs du premier (28) et du deuxième (31) élément assure ou bloque le passage de fluide d'une chambre à l'autre du volume (17) de l'amortisseur (15) du piston. Cet alignement et/ou ce décalage sont assurés par le déplacement du second élément (31) par rapport au premier élément (28) de la valve. Ce déplacement est réalisé grâce à la rotation et/ou la translation du second élément (31) sur son axe.

Selon un mode de réalisation particulier, le second élément (31) de la valve présente également un alésage sur une partie de sa longueur de façon à venir réaliser un conduit qui communique avec la chambre du volume (17) qui est opposée à la tige (23) du piston (18). Ce conduit comporte, au niveau de sa paroi, des orifices (31 b) qui viennent s'aligner avec des orifices (28b) disposés dans la paroi du conduit du premier élément (28) de la valve et de la tige (23) du piston (18). Lorsque le dispositif de l'invention intègre des clapets (19, 20) de contrôle des phases de détente et de compression de l'amortisseur, le fluide qui passe à travers ces orifices rejoint directement la chambre du volume (17) opposée à la tige (23) du piston (18) sans passer par les orifices gérés par les clapets (19, 20).

L'extrémité du second élément (31) de la valve qui dépasse du premier élément (28) de la valve du coté opposé au volume (17) de l'amortisseur (15) est fixée à un levier (32) disposé dans un plan sensiblement perpendiculaire à l'axe du second élément (31), de sorte qu'un débattement du levier (32) dans son plan de pivotement entraîne la rotation du second élément (31) de la valve sur son axe. Ce levier (32) forme, par exemple, un élément axial monté sur le second élément de la valve (31) au niveau d'un point disposé sensiblement au milieu de l'axe. Une des extrémités du levier (32) est fixée au câble (6) de commande du détecteur (13) d'effort de pédalage ou de tension de chaine monté sur un pédalier (4) particulier du véhicule, une tension sur le câble (6) entraînant le déplacement du second élément (31) de la valve par rapport au premier élément (28) et la fermeture des orifices de la paroi mobile du piston (18) pour contrôler, moduler ou empêcher le passage du fluide du piston (18) d'une chambre à une autre.

Le levier (32) étant monté sur l'extrémité du second élément (31) de la valve de sorte que l'extrémité du second élément (31) de la valve soit insérée dans un alésage du levier (32) perpendiculaire à l'axe du levier, la fixation du second élément de la valve (31) sur le levier (32) fait alors intervenir une vis (33) disposée dans un alésage du levier (32) et selon l'axe du levier (32). Lors de son positionnement, cette vis (33) vient traverser un alésage situé à l'extrémité du second élément (31) de la valve monté sur le levier (32) solidarisant de façon réversible le second élément (31) de la valve et le levier (32).

Selon une variante de réalisation, le levier est monté pivotant dans un plan sensiblement parallèle à l'axe de l'amortisseur. Le levier est fixé sur son axe de pivotement du levier qui est monté mobile sur un support de la structure du dispositif amortisseur de suspension (5) ou du cadre, l'axe de pivotement du levier et l'axe de l'amortisseur étant sensiblement perpendiculaires entre eux. Une extrémité de l'axe de pivotement du levier s'articule alors avec l'extrémité du second élément (31) de la valve en faisant intervenir un dispositif de renvoi d'angle, par exemple de type pignons coniques. Le pivotement du levier sur son axe entraine une rotation axiale de l'axe de pivotement du levier et, via le dispositif de renvoi d'angle, une rotation axiale du second élément (31) de la valve et ainsi intervient sur le contrôle de la valve. A titre d'exemple, un autre dispositif de renvoi d'angle peut être réalisé grâce à un dispositif faisant intervenir un élément (100) en « U » monté pivotant au niveau de sa base dans un plan sensiblement parallèle à l'axe des éléments (28, 31) de la valve, l'axe de pivotement étant commun avec l'axe de pivotement d'un levier dont une extrémité est fixée au câble (6) du détecteur (13) d'effort de pédalage ou de tension. L'extrémité du second élément (31) de la valve est traversée perpendiculairement par un axe (110) dont une partie est mobile entre les deux branches de l'élément (100) en « U » monté sur le même axe que le levier, de sorte que la rotation du levier entraine le pivotement de l'élément (100) en « U » et que les deux branches de l'élément (100) en « U » imposent le déplacement de l'axe (110) perpendiculaire au second élément (31) de la valve le long de ces branches et/ou le pivotement de cet axe autour de l'axe du second élément (31) de la valve, de sorte que ce déplacement entraine la rotation du second élément (31) de la valve sur son axe. Des butées sont alors positionnées, par exemple, de part et d'autre des branches de l'élément (100) en « U » pour limiter l'amplitude de son pivotement.

Selon une particularité de la valve, l'ouverture de la valve est conditionnée par une translation axiale du second élément (31) par rapport au premier élément (28). Selon un montage simplifié, cette translation peut être contrôlée directement par le câble (6) qui est fixé à l'extrémité du second élément (31) de la valve, une traction du câble (6) sur l'élément (31) de la valve entraînant sa translation et le contrôle de la valve. Dans ce montage, l'arrivée du câble (6) se réalise dans l'axe de l'amortisseur. Selon un montage amélioré, l'extrémité du second élément (31) de la valve fixé à un levier monté en rotation dans plan sensiblement parallèle à l'axe de l'amortisseur, l'axe de rotation du levier se positionnant dans un plan sensiblement perpendiculaire à l'axe de translation du second élément (31) de la valve. Le câble (6) se fixe sur le levier au niveau d'un point de fixation décalé par rapport à l'axe de translation du second élément (31) de sorte que le câble (6) ne s'aligne pas avec l'axe des éléments de la valve, le câble (6) et le second élément de la valve se trouvant orienté dans des directions opposées de part et d'autre du levier. Ce montage amélioré permet de s'affranchir du problème que pose le positionnement de la gaine du câble selon l'axe de l'amortisseur au niveau de l'extrémité de l'amortisseur fixé sur le cadre.

La fixation du câble (6) sur le levier (32) fait intervenir un plomb (38) de sertissage. En sortie de gaine (7) et de tige filetée creuse (42), le câble (6) traverse un élément élastique, par exemple un ressort de compression (41), disposé entre le levier (32) et le la tige filetée creuse (42) montée sur un élément de support du dispositif amortisseur (5). Cet élément élastique (41) s'oppose à la force de tension exercée par le câble (6) du détecteur (13) sur le levier (32) et ainsi permettre un retour du levier (32) dans une position « de tension minimum du câble (6) ». Selon un mode de réalisation particulier, cet élément élastique (41) est positionné dans un volume creux, par exemple une cartouche, formé par deux éléments (39, 40) coulissant l'un dans l'autre. Un premier des éléments (40) du volume est monté au niveau d'une de ses extrémités sur la sortie de la tige filetée creuse (42) tandis que, grâce à l'élément élastique (41) disposé dans la partie creuse du volume, le second élément (39) qui coulisse à l'intérieur du premier élément (40) se trouve en butée contre un élément fixé sur le câble (6) par exemple un plomb de sertissage fixé sur le câble (6) pour former une butée ou bien encore le plomb de sertissage (38) fixant le câble (6) sur le levier (32).

Selon un mode de réalisation particulier, les deux éléments (39, 40) du volume intègre au moins une butée qui limite la compression de l'élément élastique (41) et donc définit la position du levier (32) dans une position « de tension maximum du câble (6) ».

Le positionnement de l'élément élastique (41) sur le dispositif n'est pas limité à un alignement sur l'axe du câble (6) mais peut se faire entre tous points du dispositif où l'élément élastique (41) peut s'opposer à la force de tension du câble (6) sur le levier et/ou sur l'élément de la valve en translation. De même, le positionnement de butées (36, 37) sur le dispositif pour restreindre l'amplitude du déplacement d'un des éléments (28, 31) de la valve par rapport à l'autre, peut se faire en tout point du dispositif de façon à intervenir sur au moins un des éléments mobiles du dispositif. Le positionnement d'une butée peut se faire par exemple dans la partie creuse du volume qui contient l'élément élastique (41). L'effet des butées (36, 37) sur la limitation de l'amplitude de l'action du dispositif se traduit également, via le câble (6), dans une limitation d'amplitude d'actionnement du détecteur (13) d'effort de pédalage qui est plus restreinte.

Selon un mode de réalisation particulier, l'élément élastique (41) est positionné le long du câblage (6) qui relie le détecteur (13) d'effort de pédalage à un élément du dispositif d'actionnement d'un amortisseur de suspension décrit précédemment. Le câblage (6) est réalisé avec une première longueur de câble (6a) reliée au détecteur (13) d'effort de pédalage et qui est connectée à une seconde longueur de câble (6b) au niveau d'un élément de sertissage (48). Cette seconde longueur de câble (6b) est reliée à l'amortisseur de suspension au niveau d'un élément du dispositif d'actionnement. L'effort réalisé par le détecteur (13) sur le câble (6a) est ainsi transmis via l'élément de sertissage (48) et la seconde longueur de câble (6b) pour rejoindre le dispositif d'actionnement de l'amortisseur. Chacune des longueurs (6a, 6b) du câblage est disposée coulissante dans une longueur de gaine (7a, 7b) qui lui est propre. L'élément de sertissage (48) est, lui, disposée mobile et coulissant dans une cartouche (47) montée fixée aux longueurs (7a, 7b) de gaine du câblage. La cartouche (47) présente une forme sensiblement axiale et allongée de sorte qu'une longueur du câblage qui la traverse puisse en sortir à chacune des extrémités. L'élément élastique (41) est logé à l'intérieur de la cartouche (47) de façon à être positionnée entre une extrémité de la cartouche (47) et l'élément de sertissage (48). Préférentiellement, l'élément élastique (41) est positionné entre l'élément de sertissage (48) et l'extrémité de la cartouche (47) où coulisse la longueur de câble (6a) reliée au détecteur (13), de sorte que l'élément élastique (41) s'oppose à l'effort de traction généré par le détecteur sur le câble (6a).

Selon un mode de réalisation préféré, la cartouche (47) est arrangée pour être réglée et définir une précharge de la force de l'élément élastique (41) qui s'oppose à la tension du câble (6). Un exemple de montage consiste à réaliser la cartouche (47) à partir de deux demi-cartouches (47a, 47b) insérées l'une taraudée sur sa face interne dans l'autre filetée sur sa face externe. Le pivotement de l'une des demi-cartouches autour de son axe par rapport à l'autre permet alors de modifier la longueur de la cartouche (47) pour régler la précharge de la force de l'élément élastique (41). Tout autre système connu pour modifier la longueur de la cartouche (47) peut être utilisé pour modifier et régler la précharge de l'élément élastique (41).

Un mode de réalisation particulier du câblage permet de connecter une longueur de câble (6c) supplémentaire à l'élément de sertissage (48) pour actionner un second amortisseur. Cette longueur de câble (6c) supplémentaire et sa gaine (7c) sont montées, dans la cartouche (47), parallèlement à la longueur de câble (6b) qui est connectée entre l'élément de sertissage (48) et le dispositif d'actionnement d'un premier amortisseur. Les premier et second amortisseurs peuvent ainsi être actionnés concomitamment, et parallèlement, par le détecteur (13) tout en étant positionnés à des points différents du véhicule cycliste. Ce principe ne se limite pas à une paire d'amortisseurs mais peut être adapté à un plus grand nombre.

Selon un autre mode de réalisation particulier, le dispositif de l'invention comprend deux éléments élastiques (41a, 41b) logés dans la cartouche (47). Préférentiellement, ces éléments élastiques (41a, 41 b) sont formés par une paire de ressorts hélicoïdaux positionnés de façon coaxiale le long de l'axe de la cartouche (47). Un premier élément élastique (41 a) est positionné de sorte qu'une première de ses extrémités s'appuie contre l'élément de sertissage (48) et que la seconde extrémité s'appuie contre l'extrémité intérieure de la cartouche (47). Le second élément élastique (41 b) est positionné de sorte qu'une première de ses extrémités s'appuie contre l'élément de sertissage (48) et que la seconde extrémité est laissée libre. Cette extrémité libre entre en contact et s'appuie alors contre la même extrémité intérieure de la cartouche (47) que le premier élément élastique (41a) lorsque le câble (6) subit une force de traction. L'écrasement du second élément élastique (41b) au niveau de sa seconde extrémité à l'intérieur de la cartouche peut s'effectuer directement ou par l'intermédiaire d'une ou de plusieurs pièces (49, 50, 51) positionnées entre l'extrémité libre de l'élément élastique (41 b) et l'intérieur de la cartouche (47).

Les figures 10a et 10b présentent un exemple de réalisation où le premier élément élastique (41 a) est formé par un ressort hélicoïdal de diamètre supérieur et de longueur supérieure au diamètre et à la longueur respective du ressort qui forme le second élément élastique (41b). Le premier élément élastique (41 a) forme ainsi un ressort, dit « mou », avec une rigidité plus faible et une capacité de déformation plus importante que le second élément élastique (41 b) qui forme un ressort, dit « dur », ces ressorts présentent ainsi des coefficients de résistance à la compression différents lors d'une traction sur le câblage (6). Au repos, le premier élément élastique (41 a) repousse l'élément de sertissage (48) de l'extrémité de la cartouche (47) contre laquelle il est écrasé lorsque le câble (6) subit une force de traction. Ainsi, le premier élément élastique (41a) permet au câblage (6) d'une part de revenir dans sa position « de tension minimum du câblage (6) », en absence d'effort de traction de la part du détecteur (13) et d'autre part de s'opposer ou de compenser une force de traction sur le câblage (6). Le second élément élastique (41b) agit lorsque le câblage (6) subit un effort de traction plus important. De par sa longueur plus courte, il n'agit que lorsque la traction sur le câblage (6) dépasse une certaine valeur. Cette différence de coefficients de résistance à la compression permet, lors d'une traction progressive sur le câblage (6), d'obtenir une force d'opposition à la traction qui est successivement graduée pour permettre une action au niveau de l'amortisseur qui soit adaptée à l'importance de l'effort détectée au niveau du pédalier. Ainsi, c'est le dépassement par la traction sur le câblage (6) d'une certaine valeur seuil qui actionne le second élément élastique (41 b) et permet un changement de la rigidité du système élastique. Selon un mode de réalisation particulier, le positionnement et la fixation de chacun des ressorts qui forment les éléments élastiques (41a, 41b) sur l'élément de sertissage (48), s'effectue au niveau d'une gorge circulaire respective. Ces gorges circulaires sont alors concentriques, centrées et coaxiale avec l'axe du câblage (6).

Selon un mode de réalisation particulier du réglage de la précharge, la cartouche étant réalisée par une première demi-cartouche filetée (47b) insérée dans une seconde demi-cartouche (47a) taraudée, l'extrémité intérieure d'une (47a) des demi-cartouches comprend une pluralité de forages (52) disposée circulairement et centrée sur l'axe du câble (6). Chacun des forages (52) forme un incrément dans lequel une bille (51) guidée par un élément de guidage (49) vient se positionner lors du réglage de la précharge. La profondeur du forage est inférieure au diamètre de la bille (51) pour que la bille puisse être déplacée d'un premier forage vers un forage adjacent. L'élément de guidage (49) est formé d'au moins une pièce traversée par un segment du câble (6), montée mobile en rotation et fixe en translation avec la demi-cartouche (47a) qui porte la pluralité de forages (52) et montée fixe en rotation et mobile en translation avec l'autre demi-cartouche (47b) dans laquelle coulisse l'élément de sertissage (48). Cet élément de guidage (49) présente au moins une face avec au moins une cavité qui forme un logement (49b) pour une bille (51). La profondeur de la cavité (49b) est inférieure au diamètre de la bille mais suffisamment importante pour que la bille (51) demeure maintenue dans son logement (49b), seule une section de sphère de la bille (51) déborde de la cavité (49b). De plus, la cavité (49b) est disposée de façon à être en regard d'au moins un forage (52) de la demi-cartouche (47a), le pivotement d'une demi-cartouche (47b) autour de son axe par rapport à l'autre (47a) fait concomitamment pivoter l'élément de guidage (49) autour de l'axe du câble (6) et déplace la bille (51) depuis un premier forage vers un forage adjacent. L'élément de guidage (49) présente également une face opposée à la face qui porte la bille et en contact avec au moins un élément élastique (41 a, 41b). Cette face est destinée à recevoir la pression d'au moins un élément élastique (41 a, 41b) comprimé par le câble (6) en traction. L'élément élastique maintient ainsi l'élément de guidage (49) fixe en translation avec la demi-cartouche (47a) qui porte la pluralité de forages (52) et donc la bille (51) contre l'extrémité intérieure de la demi-cartouche (47a), maintenant concomitamment le positionnement de la bille dans un des forages dans lequel elle a été guidée. Avec ce dispositif, lors du réglage de la précharge, par rotation de la demi-cartouche filetée (47b) par rapport à la demi-cartouche (47a) taraudée, la longueur de la cartouche (47) est modifiée proportionnellement à la compression de l'élément élastique (41) en position « de tension minimum du câble (6) ». De plus, la rotation par incrément, réalisé par le positionnement successif de la bille dans un des forages, génère un cliquetis qui augmente avec la compression de l'élément élastique (41) en position « de tension minimum du câble (6) » et donc de la précharge.

Une réalisation particulière pour le montage de l'élément de guidage (49) afin que celui-ci soit d'une part mobile en rotation et fixe en translation avec la demi-cartouche (47a) qui porte la pluralité de forages (52) et d'autre part fixe en rotation et mobile en translation avec l'autre demi-cartouche (47b), peut consister à l'associer à une pièce intermédiaire (50) fixe en rotation et en translation avec la demi-cartouche (47b) dans laquelle coulisse l'élément de sertissage (48). L'élément de guidage (49) est alors formé par un cylindre de diamètre sensiblement identique au diamètre intérieur de la demi-cartouche (47b) dans laquelle coulisse l'élément de sertissage (48) et dans laquelle l'élément de guidage (49) est positionné fou. Cet élément de guidage (49) comprend un évidement sur une partie de sa longueur ayant la forme d'une section plane de cylindre formant sensiblement un plan comprenant l'axe du cylindre et centré sur l'axe de rotation de l'élément de guidage (49). Sur l'élément de guidage (49), l'évidement est ouvert vers la même face que les cavités (49b) des logements des billes (51). Ces cavités (49b) sont portées par des épaulements disposées de part et d'autre de l'évidemment, c'est à dire sur la face opposée à la face destinée à recevoir la pression d'un élément élastique (41). La pièce intermédiaire (50) interagit avec l'élément de guidage (49) au niveau de son évidement, au niveau d'au moins une partie de son corps qui présente la forme d'une section de cylindre adaptée pour s'insérer dans l'évidement de l'élément de guidage (49) et de diamètre sensiblement identique au diamètre intérieur de la demi-cartouche (47a) qui porte la pluralité de forages (52). Cette pièce intermédiaire (50) est fixée au niveau de sa partie en forme de section de cylindre avec le bord de l'ouverture de la demi-cartouche (47b) dans laquelle coulisse l'élément de sertissage (48). La fixation de la pièce intermédiaire (50) sur la demi-cartouche (47b) laisse deux ouvertures dans lesquelles coulissent en translation les épaulements de l'élément de guidage (49) et bloquant simultanément la rotation de l'élément de guidage par rapport à la pièce intermédiaire (50) et donc à la demi-cartouche (47b). Ainsi, l'élément de guidage (49) étant déjà mobile en rotation et fixe en translation avec la demi-cartouche (47a) qui porte la pluralité de forages (52), la pièce intermédiaire (50) permet à l'élément de guidage (49) d'être monté fixe en rotation et mobile en translation avec la demi-cartouche (47b) dans laquelle coulisse l'élément de sertissage (48). Par ailleurs, le gainage (7) du câblage (6) est monté sur la pièce intermédiaire, de sorte que, cette pièce intermédiaire (50) étant d'une part fixe avec la demi-cartouche (47b) dans laquelle coulisse l'élément de sertissage (48) et qui porte également le gainage (7) et d'autre part indépendante de la demi-cartouche (47a) qui porte les forages (52), le réglage de la précharge en modifiant la longueur de la cartouche (47) ne génère pas de modification de longueur sur le gainage (7) du câblage (6).

Le retour du levier (32) dans une position « de tension minimum du câble (6) » peut également être assuré par un élément élastique, par exemple un ressort de torsion (34). Ce ressort (34) présente au moins une extrémité (34a), mobile avec le levier (32), en appui contre une saillie (33a) du levier (32) qui permet un retour du levier (32) dans une position « de tension minimum du câble (6) ».

Selon un mode de réalisation préféré, le ressort de torsion (34) présente une partie circulaire montée autour de l'extrémité du second élément (31) de la valve, l'extrémité (34a), mobile, du ressort se trouve alors en appui contre une saillie (32a) du levier (32) tandis que l'autre extrémité (34b), fixe par rapport au levier (32), se situe en appui contre un élément de la structure du dispositif amortisseur (5). Selon une particularité de l'invention, l'extrémité (34b) se trouve en appui contre un élément de réglage de la précharge (35) formé par une vis de réglage positionnée dans le perçage taraudé d'un élément de support monté sur la structure du dispositif de contrôle d'amortissement. Une des extrémités de la vis sert alors de butée pour l'extrémité (34b) fixe du ressort (34) lorsque le levier (32) vient en position « de tension maximum du câble (6) » pour bloquer le passage de liquide d'une chambre à l'autre de l'amortisseur (15) hydraulique. La vis de précharge (35) est associée à un billage dans le perçage taraudé. La vis (35) présente ainsi plusieurs stries disposées dans sa longueur et radialement à intervalles réguliers qui interagissent avec une bille monté sur un ressort dans un alésage disposé de façon sensiblement perpendiculaire à l'axe de l'alésage taraudé dans lequel se positionne la vis de précharge (35). Lors du vissage de la vis de précharge (35) dans le perçage taraudé, la bille vient alors se positionner dans les stries successives permettant de bloquer la vis de précharge (35) dans une position définie. De plus, le cliquetis de la bille sur les stries successives lors du serrage de la vis (35) permet à l'utilisateur de d'évaluer le réglage de la précharge.

Le débattement du levier (32) se trouve limité par au moins une butée, préférentiellement deux butés, une première butée (37) pour une position « de tension maximum du câble (6) » sur le levier (32) et une seconde butée (36) pour une position « de tension minimum du câble (6) » sur le levier (32), ces positions correspondant au niveau de la valve respectivement à une position de décalage des orifices des premier (28) et second (31) éléments de la valve et à une position d'alignement des premier (28) et second (31) éléments de la valve. Ces deux butées (36, 37) sont fixées sur un élément de support monté sur le dispositif amortisseur de suspension (5) et disposées de part et d'autre d'au moins une extrémité du levier (32), et préférentiellement de l'extrémité du levier (32) qui est opposée au point de fixation du câble (6) sur le levier (32) par rapport au point de fixation du levier (32) sur le second élément (31) de la valve. Ces butées (36, 37) peuvent être montées réglables en étant formées par des éléments vissés sur l'élément de support. Ce montage peut également faire intervenir un billage comme pour la réalisation de la vis de précharge (35).

Lorsque le second élément (31) de la valve est mobile en translation selon son axe, la force d'opposition à la force de tension du câble (6) sur le levier ou sur l'élément de la valve en translation peut être générée par un second élément élastique formé par un ressort à rondelle ou rondelle « Belleville » disposé au niveau du piston (18) de l'amortisseur, sur la face du piston (18) opposée à la tige (23). L'extrémité du second élément (31) mobile de la valve est fixé au centre de la rondelle « Belleville » de sorte qu'une tension du câble (6) entraine une translation de l'élément de la valve et un écrasement de la rondelle « Belleville » sur la surface du piston (18). Selon un mode de réalisation particulier, l'écrasement de la rondelle « Belleville » sur la surface du piston permet à la rondelle de recouvrir totalement ou partiellement au moins un clapet de détente (20) ou de compression (19) et ainsi renforce son fonctionnement.

Selon un mode de réalisation particulier, le câble (6) commandé par le détecteur (13) permet de contrôler le dispositif amortisseur de suspension (5) monté sur le cadre du véhicule, mais également un second dispositif amortisseur de suspension (2) monté par exemple sur la fourche du véhicule. Pour ce faire, au-delà du point de fixation du câble (6) sur l'extrémité du levier (32), le câble (6) se prolonge vers une tige filetée creuse (45) qui positionne une nouvelle gaine (46) conduisant au second dispositif amortisseur de suspension (2). Selon une variante de réalisation, le câble (6) est prolongé, au-delà de son point de fixation sur le levier, par un second câble qui est destiné à l'activation du second dispositif amortisseur (2).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Dispositif de contrôle d'un dispositif amortisseur de suspension (2, 5) monté sur le cadre (11) d'un véhicule cycliste et commandé via au moins un câble (6) par un détecteur (13) d'effort de pédalage ou de tension de chaine monté sur un pédalier du véhicule, un amortisseur hydraulique de suspension (15) étant monté entre au moins deux parties du cadre (11) du véhicule montées mobiles entre elles et/ou associées à un élément de ressort (16) monté avec l'amortisseur (15), l'amortisseur hydraulique (15) comprenant :
- un volume (17) fixé à une première des deux parties du cadre (11) et intégrant une partie hydraulique avec deux chambres séparées par la paroi mobile d'un piston (18) présentant au moins un orifice pour le passage d'un fluide depuis une chambre vers une autre,
- un gaz séparé de la partie hydraulique par une paroi mobile,
- une tige (23) du piston (18) dont une première extrémité est fixée à la paroi mobile du piston (18) et dont la seconde extrémité est fixée sur la seconde des deux parties du cadre (11),
**caractérisé en ce que** la paroi mobile du piston (18) est munie d'une valve dont l'ouverture, commandée par le détecteur (13) d'effort de pédalage ou de tension, gère le passage de fluide depuis une chambre de la partie hydraulique vers une autre,
et **en ce que** la valve est actionnée, au niveau du dispositif amortisseur de suspension (5), par un dispositif d'actionnement dont une extrémité est fixée au câble (6) du détecteur (13) de pédalage, le dispositif d'actionnement se déplaçant entre au moins deux positions, une première position ouvrant la valve et une seconde position refermant la valve lors de la détection d'un effort de pédalage déterminé, le câble (6) du détecteur (13) débouchant de sa gaine (7) au niveau d'un support (43) monté sur le dispositif amortisseur de suspension (5) et/ou sur le cadre du véhicule, au moins un élément élastique (41) est associé au câble (6) de façon à s'opposer à la force de traction du câble (6) sur le dispositif d'actionnement, pour permettre une action antagoniste à la traction du câble (6) et revenir dans une position ouvrant au moins partiellement la valve et autorisant le passage d'un fluide depuis une chambre vers une autre,
l'élément élastique (41) étant logé dans un volume permettant de définir une précharge de la force de l'élément élastique qui s'oppose à la traction du câble sur le dispositif d'actionnement.

2. Dispositif de contrôle d'un amortisseur de suspension selon la revendication 1, **caractérisé en ce que** les deux positions qui limitent l'amplitude du fonctionnement du dispositif d'actionnement sont définies par des butées disposées sur la structure du dispositif amortisseur ou d'un élément du dispositif amortisseur pour restreindre d'une part le déplacement d'au moins un élément mobile du dispositif amortisseur, et d'autre part l'amplitude d'actionnement du détecteur (13) d'effort de pédalage.

3. Dispositif de contrôle d'un amortisseur de suspension selon la revendication 1 ou 2, **caractérisé en ce que** le dispositif d'actionnement comprend un levier (32) pivotant entre au moins deux positions, une première position ouvrant la valve et une seconde position refermant la valve lors de la détection d'un effort de pédalage déterminé, le câble (6) du détecteur (13) débouchant de sa gaine (7) au niveau d'un support (43) monté sur le dispositif amortisseur de suspension (5) et/ou sur le cadre du véhicule, au moins un élément élastique (41) s'oppose à la force de traction du câble (6) sur le levier (32), pour permettre une action antagoniste à la traction du câble (6) sur le levier (32) et revenir dans une position ouvrant au moins partiellement la valve et autorisant le passage d'un fluide depuis une chambre vers une autre.

4. Dispositif de contrôle d'un amortisseur de suspension selon une des revendications 1 à 3, **caractérisé en ce que** la tige (23) du piston (18) étant creuse, le dispositif de contrôle présente une valve qui comprend au moins :
- un premier élément (28) creux dans sa longueur et positionné dans la longueur de la tige creuse (23) du piston (18), fixé à la paroi interne de la tige creuse (23) du piston et dont un prolongement dans une des chambres de l'amortisseur (15) forme au moins une partie de la paroi mobile du piston (18), ce prolongement au niveau de la paroi mobile supportant au moins un orifice (28a, 28b) pour le passage d'un fluide depuis une chambre de l'amortisseur (15) vers une autre,
- un second élément (31) positionné dans la longueur et contre la paroi interne du premier élément (28) creux, monté mobile par rapport au premier élément (28) creux de façon à permettre au moins une rotation axiale et/ou une translation axiale selon l'axe de la tige du piston (18) et des deux éléments (28, 31) de la valve, et dont un prolongement dans une des chambres de l'amortisseur (15) forme au moins une partie de la paroi mobile du piston (18) et comprend au moins un orifice (31a, 31b) mobile pour contrôler le passage d'un fluide depuis une chambre de l'amortisseur (15) vers une autre,
de sorte qu'un glissement du prolongement du second élément (31) de la valve sur le prolongement du premier élément (28) de la valve permet un alignement ou un décalage des orifices (28a, 28b, 31 a, 31b) respectifs pour respectivement autoriser le passage d'un fluide depuis une chambre de l'amortisseur (15) vers une autre ou bloquer ce passage.

5. Dispositif de contrôle d'un amortisseur de suspension selon une des revendications 1 à 4, **caractérisé en ce que** au moins un élément élastique (41) est positionné entre le support (43) et au moins un élément du dispositif d'actionnement.

6. Dispositif de contrôle d'un amortisseur de suspension selon la revendication 5, **caractérisé en ce que** la fixation de la gaine (7) du câble (6) sur le support (43) fait intervenir un élément de réglage de la position de l'élément élastique (41) formé par une tige filetée creuse (42) montée dans un perçage taraudé du support (43) et traversée par le câble (6), une extrémité de la tige filetée creuse (42) se trouvant en appui contre l'extrémité de l'élément élastique (41) dont l'extrémité opposée reçoit un élément fixé au câble (6), la position de la tige filetée creuse (42) dans le perçage taraudé étant susceptible d'être réglée pour définir une précharge de la force de l'élément élastique (41) qui s'oppose à la tension du câble (6) sur le levier (32).

7. Dispositif de contrôle d'un amortisseur de suspension selon une des revendications 1 à 4, **caractérisé en ce que** au moins un élément élastique (41) est positionné le long du câblage (6) qui relie le détecteur (13) d'effort de pédalage à au moins un élément du dispositif d'actionnement d'au moins un amortisseur de suspension.

8. Dispositif de contrôle d'un amortisseur de suspension selon la revendication 7, **caractérisé en ce que** le câblage (6) est formé d'une première longueur de câble (6a) relié au détecteur d'effort de pédalage et au moins une seconde longueur de câble (6b, 6c) relié au dispositif d'actionnement d'au moins un amortisseur de suspension, la première longueur de câble (6a) est connecté avec au moins une seconde longueur de câble (6b, 6c) au niveau d'un élément de sertissage (48) monté coulissant dans une cartouche (47) monté fixe avec la gaine (7) du câblage (6), l'élément élastique (41) étant logé dans la cartouche (47) entre une extrémité de la cartouche et l'élément de sertissage (48) de façon à s'opposer à la force de traction du câble (6) sur le dispositif d'actionnement.

9. Dispositif de contrôle d'un amortisseur de suspension selon une des revendications 7 à 8, **caractérisé en ce que** la cartouche (47) fixée à la gaine (7) du câblage (6) est arrangée de sorte que sa longueur puisse être réglée de façon à définir une précharge de la force de l'élément élastique (41) qui s'oppose à la tension du câble (6).

10. Dispositif de contrôle d'un amortisseur de suspension selon une des revendications 7 à 9, **caractérisé en ce que** l'élément de sertissage (48) connecte la première longueur de câble (6a) d'une part avec une seconde longueur (6b) de câble pour transmettre l'action du détecteur (13) d'effort de pédalage à au moins un élément du dispositif d'actionnement d'un amortisseur de suspension monté à un premier point du véhicule cycliste et d'autre part avec une troisième longueur (6c) de câble pour transmettre l'action du détecteur (13) d'effort de pédalage à au moins un élément du dispositif d'actionnement d'un amortisseur de suspension monté à un second point du véhicule cycliste.

11. Dispositif de contrôle d'un amortisseur de suspension selon une des revendications 8 à 10, **caractérisé en ce que** le dispositif comprend au moins deux éléments élastiques (41a, 41b), chacun ayant une extrémité fixée au niveau de l'élément de sertissage (48) coulissant,
- un premier élément élastique (41a), dit « mou » et adapté pour s'opposer à la force de traction du câble (6) sur le dispositif d'actionnement avec un premier coefficient de résistance à la compression et permettre un retour du câble (6) en absence de traction sur le câble (6), est positionné de sorte que sa seconde extrémité soit en appui direct ou indirect contre une extrémité de la cartouche (47) et
- un second élément élastique (41b), dit « dur » et adapté pour s'opposer à la force de traction du câble (6) sur le dispositif d'actionnement avec un second coefficient de résistance à la compression, positionné de sorte que sa seconde extrémité soit libre et appuie directement ou indirectement contre une extrémité de la cartouche (47) lorsque le câble (6) subit une force de traction.

12. Dispositif de contrôle d'un amortisseur de suspension selon une des revendications 9 à 11, **caractérisé en ce que**, la cartouche étant formée par une première demi-cartouche (47b) insérée dans une seconde demi-cartouche (47a), le dispositif comprend un élément de guidage (49) d'au moins une bille (51) logée dans une cavité (49b) d'une face de l'élément de guidage (49), l'élément de guidage étant monté fixe en pivotement et coulissant en translation avec une première demi-cartouche (47b) selon l'axe de la cartouche (47) et mobile en pivotement avec la seconde demi-cartouche (47a) de sorte que, l'élément de guidage (49) mis en pression par au moins un élément élastique (41) contre l'extrémité intérieure de la seconde demi-cartouche (47a) au niveau de la face opposée à la face qui intègre la bille (51) est maintenue fixe en translation avec la seconde demi-cartouche (47a) au niveau d'au moins une bille (51) qui se positionne successivement dans un forage (52) parmi une pluralité de forages disposée circulairement à l'extrémité intérieure de la demi-cartouche (47a), lors du réglage d'une précharge par pivotement d'une (47a) des demi-cartouches par rapport à l'autre (47b).

13. Dispositif de contrôle d'un amortisseur de suspension selon une des revendications 1 à 10, **caractérisé en ce qu'**un ressort de torsion (34) se trouve positionné sur le dispositif amortisseur de suspension (5) avec au moins une de ses extrémités (34a) montées contre une saillie (32a) du levier (32) de façon à s'opposer à la force de traction du câble (6) sur le levier (32) et de permettre au levier (32) de revenir dans une position autorisant au niveau du piston (18) le passage d'un fluide depuis une chambre vers une autre.

14. Dispositif de contrôle d'un amortisseur de suspension selon la revendication 13, **caractérisé en ce que** le ressort de torsion (34) est monté enroulé autour de l'extrémité du second élément (31) de la valve qui dépasse du premier élément (8) de la valve et de la tige (23) du piston (18), une première extrémité (34a) du ressort (34), mobile avec le levier (32), est positionné contre une saillie (32a) du levier (32) et la seconde extrémité (34b), fixe par rapport à la structure du dispositif amortisseur de suspension (5), est positionnée et/ou coincée et/ou fixée contre un appui (35) formé par la structure de l'amortisseur.

15. Dispositif de contrôle d'un amortisseur de suspension selon une des revendications 14, **caractérisé en ce que** la seconde extrémité fixe (34b) du ressort de torsion (34) prend appui contre un élément réglable formé par une vis de précharge (35) positionnée dans le perçage taraudé d'un support monté sur la structure du dispositif amortisseur (5) et dont une extrémité de la vis de précharge (35) forme une butée réglable pour définir la force du ressort de torsion (34) qui s'oppose à la tension du câble (6) sur le levier (32).

16. Dispositif de contrôle d'un amortisseur de suspension selon une des revendications 1 à 13, **caractérisé en ce que** la paroi mobile du piston (18) comprend au moins deux niveaux superposés, un premier niveau comprenant au moins un orifice associé à au moins un clapet monté en détente (20) et/ou en compression (19) pour contrôler respectivement les phases de détente et/ou de compression de l'amortisseur et un second niveau comprenant au moins un orifice (28a, 31a) dont le passage de fluide est contrôlé par le premier (28) et le second (31) élément de la valve.

17. Dispositif de contrôle d'un amortisseur de suspension selon une des revendications 5 à 14, **caractérisé en ce que** le débattement du levier (32) est un pivotement dans un plan sensiblement perpendiculaire à l'axe de la tige (23) du piston (18) et des éléments (28, 31) de la valve et autour d'un pivot, auquel le levier (32) est fixé, formé par le second élément (31) de la valve, le débattement étant limité par au moins une butée (35, 36) montée réglable sur un élément de la structure du dispositif amortisseur (5) définissant un seuil de débattement maximum et/ou minimum qui correspond respectivement à une position « de tension maximum du câble (6) » et/ou à une position « de tension minimum du câble (6) ».

18. Dispositif de contrôle d'un amortisseur de suspension selon une des revendications 5 à 14, **caractérisé en ce que** le débattement du levier est un pivotement dans un plan sensiblement parallèle à l'axe de la tige (23) du piston (18) et des éléments (28, 31) de la valve, le pivot du levier s'articulant avec le second élément (31) de la valve par un dispositif de renvoi d'angle et le débattement étant limité par au moins une butée montée réglable sur un élément de la structure du dispositif amortisseur (5) définissant un seuil de débattement maximum et/ou minimum qui correspond respectivement à une position « de tension maximum du câble (6) » et/ou à une position « de tension minimum du câble (6) ».

19. Dispositif de contrôle d'un amortisseur de suspension selon une des revendications 5 à 14, **caractérisé en ce que** le débattement du levier est un pivotement dans un plan sensiblement parallèle à l'axe de la tige (23) du piston (18) et des éléments (28, 31) de la valve, et **en ce que**, l'extrémité du second élément (31) de la valve étant fixé mobile au levier, le câble (6) est fixé sur le levier au niveau d'un point de fixation décalé par rapport à l'axe de translation du second élément (31) de la valve de sorte que le câble (6) ne s'aligne pas avec l'axe des éléments de la valve, le câble (6) et le second élément de la valve se trouvant orienté dans des directions opposées de part et d'autre du levier.

20. Dispositif de contrôle d'un amortisseur de suspension selon une des revendications 5 à 14 ou 17, **caractérisé en ce que** le second élément (31) étant mobile en translation axiale, un ressort à rondelle ou une rondelle « Belleville » est monté sur la face du piston (18) opposée à la tige (23) de sorte que l'extrémité du second élément (31) mobile de la valve est fixé au centre du ressort rondelle et qu'un écrasement du ressort rondelle génère une force d'opposition à la force de tension du câble (6) sur le levier.

21. Dispositif de contrôle d'un amortisseur de suspension selon une des revendications 5 à 18, **caractérisé en ce que** le câble (6) du détecteur (13) sortant de sa gaine (7) au niveau du dispositif amortisseur de suspension (5) pour se fixer à une extrémité du levier (32), se prolonge hors du dispositif amortisseur (5) pour entrer dans une nouvelle gaine (46) et rejoindre un second dispositif amortisseur de suspension (2) du véhicule, les extrémités des gaines (7, 46) au niveau des dispositifs amortisseurs de suspension (2, 5) étant maintenues en place par des tiges filetées creuses (42, 45).

## Claims

1. Device for controlling a shock-absorbing suspension device (2, 5) which is mounted on the frame (11) of a cycle and is controlled via at least one cable (6) by a detector (13) of pedaling force or of chain tension mounted on a pedal unit of the cycle, wherein a hydraulic shock-absorbing suspension device (15) is mounted between at least two parts of the frame (11) of the vehicle which are mounted so as be movable relative to one another and/or are associated with a spring element (16) mounted with the shock-absorbing device, the hydraulic shock-absorbing device comprising:
- a volume (17) which is fixed to a first of the two parts of the frame (11) and integrates a hydraulic part with two chambers separated by the movable wall of a piston (18) having at least one orifice for the passage of a fluid from one chamber to another,
- a gas separated from the hydraulic part by a movable wall,
- a rod (23) of the piston (18) of which a first end is fixed to the movable wall of the piston (18) and of which the second end is fixed on the second of the two parts of the frame (11),
**characterised in that** the movable wall of the piston is fitted with a valve of which the opening, controlled by the detector (13) of pedalling force or of chain tension, manages the passage of a fluid from one chamber of the hydraulic part to another, and **in that** the valve is actuated, in the region of the shock-absorbing suspension device (5), by an actuating device of which one end is fixed to the cable (6) of the pedaling detector (13), wherein the actuating device moves between at least two positions, namely a first position in which the valve is open and a second position in which the valve is closed when a specific pedaling force is detected, wherein the cable (6) of the detector (13) comes out of its sheath (7) in the region of a holder (43) mounted on the shock-absorbing suspension device (5) and/or on the frame of the vehicle, and wherein at least one elastic element (41) is attached to the cable (6) in such a way as to oppose the traction force of the cable (6) on the actuating device in order to make it possible to counteract the traction of the cable and to return to a position which at least partially opens the valve and allows the passage of a fluid from one chamber to another, the elastic element (41) being accommodated in a volume which makes it possible to define preloading of the force of the elastic element which opposes the traction of the cable on the actuating device.

2. Device for controlling a shock-absorbing suspension device as claimed in Claim 1, **characterised in that** the two positions which limit the range of operation of the actuating device are defined by stops disposed on the structure of the shock-absorbing device or an element of the shock-absorbing device in order to restrict, on the one hand, the displacement of at least one movable element of the shock-absorbing device and, on the other hand, the range of actuation of the pedaling force detector (13).

3. Device for controlling a shock-absorbing suspension device as claimed in Claim 1 or Claim 2, **characterised in that** the actuating device comprises a lever (32) which pivots between at least two positions, namely a first position in which the valve is open and a second position in which the valve is closed when a specific pedalling force is detected, wherein the cable (6) of the detector (13) comes out of its sheath (7) in the region of a holder (43) mounted on the shock-absorbing suspension device (5) and/or on the frame of the vehicle, and wherein at least one elastic element (41) opposes the traction force of the cable (6) on the lever (32) in order to make it possible to counteract the traction of the cable (6) on the lever (32) and to return to a position which at least partially opens the valve and allows the passage of a fluid from one chamber to another.

4. Device for controlling a shock-absorbing suspension device as claimed in Claim 1, **characterised in that** the rod (23) of the piston (18) is hollow and the control device has a valve which comprises at least:
- a first element which is hollow over its length and is positioned in the length of the hollow rod (23) of the piston (18), fixed to the inner wall of the hollow rod (23) of the piston and of which an extension in one of the chambers of the shock-absorbing device (15) forms at least part of the movable wall of the piston (18), wherein this extension in the region of the movable wall supports at least one orifice for the passage of a fluid from one chamber of the shock-absorbing device (15) to another,
- a second element (31) which is positioned along the length and against the inner wall of the first hollow element (28) and is mounted so as to be movable relative to the first hollow element (28) in such a way as to allow at least axial rotation and/or axial translation with respect to the axis of the rod of the piston (18) and of the two elements (28, 31) of the valve, wherein an extension of the second element into one of the chambers of the shock-absorbing device (15) forms at least a part of the movable wall of the piston (18) and comprises at least one movable orifice (31a, 31b) in order to control the passage of a fluid from one chamber of the shock-absorbing device (15) to another,
such that sliding of the extension of the second element (31) of the valve on the extension of the first element (28) of the valve allows alignement or offset of the respective orifices (28a, 28b, 31a, 31b) in order to respectively enable the passage of a fluid from one chamber or the shock-absorbing device (15) to another or to block the passage of fluid.

5. Device for controlling a shock-absorbing suspension device as claimed in any one of Claims 1 to 4, **characterised in that** at least one elastic element (41) is positioned between the holder (43) and at least one element of the actuating devise.

6. Device for controlling a shock-absorbing suspension device as claimed in Claim 5, **characterised in that** fixing of the sheath (7) of the cable (6) on the holder (43) requires an element for adjustment of the position of the elastic element (41) formed by a hollow threaded rod (42) which is mounted in a tapped drilling of the holder (43) and is traversed by the cable (6), wherein an end of the hollow threaded rod (42) is supported against the end of an elastic element (41), the opposite end of which receives an element fixed to the cable (6), and wherein the position of the hollow threaded rod (42) in the tapped drilling is capable of being adjusted in order to define a preloading of the force of the elastic element (41) which opposes the tension of the cable (6) on the lever (32).

7. Device for controlling a shock-absorbing suspension device as claimed in any one of Claims 1 to 4, **characterised in that** at least one elastic elements (41) is positioned along the cabling (6) which connects the pedaling force detector (13) to at least one element of the actuating device of at least one shock-absorbing suspension device.

8. Device for controlling a shock-absorbing suspension device as claimed in Claim 7, **characterised in that** the cabling (6) is formed by a first length of cable (6a) connected to the pedalling force detector and at least one second length of cable (6b, 6c) connected to the actuating device of at least one shock-absorbing suspension device, wherein the first length of cable (6a) is connected to at least one second length of cable (6b, 6c) in the region of a crimping element (48) mounted so as to slide in a cartridge (47) mounted in a fixed manner on the sheath (7) of the cabling (6), the elastic element (41) being housed in the cartridge (47) between one end of the cartridge and the crimping element (48) in such a way as to oppose the traction force of the cable (6) on the actuating device.

9. Device for controlling a shock-absorbing suspension device as claimed in any one of Claims 7 to 8, **characterised in that** the cartridge (47) fixed to the sheath (7) of the cabling (6) arranged such that its length can be adjusted in such a way as to define a preloading of the force of the elastic element (41) which opposes the tension of the cable (6).

10. Device for controlling a shock-absorbing suspension devise as claimed in any one of Claims 7 to 9, **characterised in that** the crimping element (48) connects the first length of cable (6a), on the one hand, to a second length of cable (6b) in order to transit the action of the pedalling force detector (13) to at least one element of the actuating device of a shock-absorbing suspension device mounted at a first point on the cycle and, on the other hand, to a third length of cable (6c) in order to transmit the action of the pedaling force detector (13) to at least one element of the actuator of a shock-absorbing suspension device mounted at a second point on the cycle.

11. Device for controlling a shock-absorbing suspension device as claimed in any one of Claims 8 to 10, **characterised in that** the device comprises at least two elastic elements (41a, 41b), each having an end fixed in the region of the sliding crimping element, namely
- a first, so-called "soft" elastic element (41a) which is adapted to oppose the traction force of the cable (6) on the actuating device with a first coefficient of resistance to compression and to allow return of the cable (6) in the absence of traction on the cable (6) is positioned such that its second end bears directly or indirectly against one end of the cartridge (47), and
- a second, so-called "hard" elastic element (41b) which is adapted to oppose the traction force of the cable (6) on the actuating device with a second coefficient of resistance to compression is positioned such that its second end is free and bears directly or indirectly against one end of the cartridge (47) when the cable (6) is subjected to a traction force.

12. Device for controlling a shock-absorbing suspension device as claimed in any one of Claims 9 to 11, **characterised in that** the cartridge formed by a first cartridge half (47b) inserted into a second cartridge half (47a) and the device comprises a guide element (49) for at least one ball (51) housed in a cavity (49b) in a face of the guide element (49), wherein the guide element is mounted so that it is pivotably fixed and slidable in translation with a first cartridge half (47b) with respect to the axis of the cartridge and is pivotably movable with the second cartridge half (47a) such that the guide element (49), which is pressurised by at least one elastic element (41) against the inner end of the second cartridge half (47a) in the region of the face opposite the face which encloses the ball (51), is held fixed in translation with the second cartridge half (47a) in the region of at least one ball (51) which is positioned successively in one bore (52) of a plurality of bores disposed in a circle at the inner end of the cartridge half (47a) during adjustment of preloading by pivoting of one (47a) of the cartridge halves relative to the other (47b).

13. Device for controlling a shock-absorbing suspension device as claimed in any one of Claims 1 to 10, **characterised in that** a torsion spring (34) is positioned on the shock-absorbing suspension device (5) with at least one of its ends (34a) mounted against a projection (32a) from the lever (32) in such a way as to oppose the traction force of the cable (6) on the lever (32) and to allow the lever (32) to return to a position which in the region of the piston (18) enables the passage of a fluid from one chamber to another.

14. Device for controlling a shock-absorbing suspension device as claimed in Claim 3, **characterised in that** the torsion spring (34) is mounted so that it is wound around the end of the second element (31) of the valve which extends beyond the first element (8) of the valve and of the rod (23) of the piston (18), wherein a first end (34a) of the spring (34) which is movable with the lever (32) is positioned against a projection (32a) from the lever and the second end (34b) which is fixed relative to the structure of the shock-absorbing suspension device (5) is positioned and/or wedged and/or fixed against a support (35) formed by the structure of the shock-absorbing device.

15. Device for controlling a shock-absorbing suspension device as claimed in Claim 14, **characterised in that** the second, fixed end 34b) of the torsion spring bears against an adjustable element formed by a preloading screw (35) positioned in the tapped drilling of a holder which is mounted on the structure of the shock-absorbing device (5) and of which one end of the preloading screw (35) forms an adjustable stop for defining the force of the torsion spring (34) which opposes the tension of the cable (6) on the lever (32).

16. Device for controlling a shock-absorbing suspension device as claimed in any one of Claims 1 to 13, **characterised in that** the movable wall of the piston (18) comprises at least two superimposed levels, a first level comprising at least one orifice associated with at least one check valve mounted in the expansion stroke and/or in the compression stroke for controlling respectively the relaxation and/or compression phases of the shock-absorbing device and a second level comprising at least one orifice in which the passage of fluid is controlled by the first (28) and the second (31) valve elements.

17. Device for controlling a shock-absorbing suspension device as claimed in any one of Claims 5 to 14, **characterised in that** the travel of the lever (32) is a pivoting in a plane substantially perpendicular to the axis of the rod (23) of the piston (18) and elements (28, 31) of the valve and about a pivot to which the lever (32) is fixed and which is formed by the second element (31) of the valve, the travel being limited by at least one stop (35, 36) mounted adjustably on an element of the structure of the shock-absorbing device (5) defining a maximum and/or minimum threshold of travel which corresponds respectively to a position of maximum tension of the cable (6) and/or to a position of minimum tension of the cable (6).

18. Device for controlling a shock-absorbing suspension device as claimed in any one of Claims 5 to 14, **characterised in that** the travel of the lever is a pivoting in a plane substantially parallel to the axis of the rod (23) of the piston (18) and elements (28, 31) of the valve, wherein the pivot of the lever articulates with the second element (31) of the valve by a return angle device and the travel is limited by at least one stop mounted adjustably on an element of the structure of the shock-absorbing device (5) defining a maximum and/or minimum threshold of travel which corresponds respectively to a position of maximum tension of the cable (6) and/or to a position of minimum tension of the cable (6).

19. Device for controlling a shock-absorbing suspension device as claimed in any one of Claims 5 to 14, **characterised in that** the travel of the lever is a pivoting in a plane substantially parallel to the axis of the rod (23) of the piston (18) and elements (28, 31) of the valve, and **in that** with the end of the second element (31) of the valve fixed movably on the lever the cable (6) is fixed on the lever in the region of a fixing point offset relative to the axis of translation of the second element (31) of the valve such that the cable (6) is not aligned with the axis of the elements of the valve, the cable (6) and the second valve element being oriented in opposite directions on either side of the lever.

20. Device for controlling a shock-absorbing suspension device as claimed in any one of Claims 5 to 14 or 17, **characterised in that** the second element (31) is movable in axial translation, a washer spring or a spring collar is mounted on the face of the piston (18) opposite the rod (23) such that the end of the second movable element (31) of the valve is fixed to the centre of the washer spring and **in that** crushing of the washer spring generates a force in opposition to the tension force of the cable (6) on the lever.

21. Device for controlling a shock-absorbing suspension device as claimed in any one of Claims 5 to 18, **characterised in that** the cable (6) of the detector (13) coming out of its sheath (7) in the region of the shock-absorbing suspension device (5) to be fixed at an end of the lever (32) extends out of the shock-absorbing device (5) to enter a new sheath (46) and join a second shock-absorbing suspension device (2) of the vehicle, the ends of the sheaths (7, 46) in the region of the shock-absorbing suspension devices (2, 5) being held in place by hollow threaded rods (42, 45).

## Patentansprüche

1. Vorrichtung zum Steuern einer Federungs-Dämpfungsvorrichtung (2, 5), die am Rahmen (11) eines Fahrrades montiert ist und über mindestens ein Kabel (6) mittels eines Tretkraft- oder Kettenspannungsdetektors (13), der an einem Tretlager des Fahrrades montiert ist, gesteuert wird, wobei ein Federungs-Hydraulikdämpfer (15) zwischen mindestens zwei Teilen des Rahmens (11) des Fahrrades montiert ist, die zueinander bewegbar montiert sind und/oder einem Federelement (16) zugeordnet sind, das mit dem Dämpfer (15) montiert ist, wobei der Hydraulikdämpfer (15) aufweist:
- ein Volumen (17), das an einem ersten der beiden Teile des Rahmens (11) fixiert ist und einen Hydraulikteil mit zwei durch die bewegbare Wand eines Kolbens (18) getrennten Kammern integriert, die mindestens eine Öffnung für das Strömen eines Fluids von einer Kammer in eine andere aufweist,
- ein von dem Hydraulikteil durch eine bewegbare Wand getrenntes Gas,
- eine Stange (23) des Kolbens (18), wobei ein erstes Ende derselben an der bewegbaren Wand des Kolbens (18) befestigt ist und das zweite Ende derselben an dem zweiten der beiden Teile des Rahmens (11) befestigt ist,
**dadurch gekennzeichnet, dass** die bewegbare Wand des Kolbens (18) mit einem Ventil versehen ist, dessen Öffnung, die von dem Tretkraft- oder Spannungdetektor (13) gesteuert wird, das Strömen von Fluid von einer Kammer des Hydraulikteils in eine andere steuert,
und dass das Ventil auf der Höhe der Federungs-Dämpfvorrichtung (5) mittels einer Betätigungsvorrichtung betätigt wird, deren eines Ende an dem Kabel (6) des Tretkraftdetektors (13) befestigt, ist, wobei die Betätigungsvorrichtung sich zwischen mindestens zwei Position bewegt, wobei eine erste Position das Ventil öffnet und eine zweite Position das Ventil wieder schließt, wenn eine bestimmte Tretkraft detektiert wird, wobei das Kabel (6) des Detektors (13) auf der Höhe einer Stütze (43), die an der Federungs-Dämpfungsvorrichtung (5) und/oder an dem Rahmen des Fahrrades montiert ist, aus seiner Ummantelung (7) ausmündet, mindestens ein Federelement (41), dem das Kabel (6) zugeordnet ist, um der Zugkraft des Kabels (6) an der Betätigungsvorrichtung entgegenzuwirken, um eine Gegenwirkung zu dem Zug des Kabels (6) zu ermöglichen und wieder in eine Position zu gelangen, die das Ventil zumindest teilweise öffnet und das Strömen eines Fluids von einer Kammer in eine andere zulässt,
wobei das Federelement (41) in einem Volumen aufgenommen ist, welches zulässt, eine Vorspannung der Kraft des Federelements zu definieren, die dem Zug des Kabels an der Betätigungsvorrichtung entgegenwirkt.

2. Vorrichtung zum Steuern eines Federungs-Dämpfers gemäß Anspruch 1, **dadurch gekennzeichnet, dass** die beiden Positionen, die die Funktionsamplitude der Betätigungsvorrichtung begrenzen, durch Anschläge definiert sind, die an der Struktur der Dämpfungsvorrichtung oder eines Elements der Dämpfungsvorrichtung angeordnet sind, um einerseits die Verlagerung mindestens eines bewegbaren Elements der Dämpfungsvorrichtung und andererseits die Betätigungsamplitude des Tretkraftdetektors (13) einzuschränken.

3. Vorrichtung zum Steuern eines Federungs-Dämpfers gemäß Anspruch 1 oder 2, **dadurch gekennzeichnet, dass** die Betätigungsvorrichtung einen Hebel (32) aufweist, der sich zwischen mindestens zwei Positionen dreht wobei eine erste Position das Ventil öffnet und eine zweite Position das Ventil wieder schließt, wenn eine bestimmte Tretkraft detektiert wird, wobei das Kabel (6) des Detektors (13) auf der Höhe einer Stütze (43), die an der Federungs-Dämpfungsvorrichtung (5) und/oder an dem Rahmen des Fahrrades montiert ist, aus seiner Ummantelung (7) ausmündet, mindestens ein Federelement (41) der Zugkraft des Kabels (6) an dem Hebel (32) entgegenwirkt, um eine Gegenwirkung zu dem Zug des Kabels (6) an dem Hebel (32) zu ermöglichen und in eine Position zurückzugelangen, die das Ventil zumindest teilweise öffnet und das Strömen eines Fluids von einer Kammer in eine andere zulässt.

4. Vorrichtung zum Steuern eines Federungs-Dämpfers gemäß einem der Ansprüche 1 bis 3, **dadurch gekennzeichnet, dass** die Stange (23) des Kolbens (18) hohl ist und die Steuervorrichtung ein Ventil aufweist, welches mindestens aufweist:
- ein in seiner Länge hohles und in der Länge der hohlen Stange (23) des Kolbens (18) angeordnetes erstes Element (28), das an der Innenwand der hohlen Stange (23) des Kolbens befestigt ist, wobei eine Verlängerung desselben in einer der Kammern des Dämpfers (15) zumindest einen Teil der bewegbaren Wand des Kolbens (18) ausbildet, wobei die Verlängerung auf der Höhe der bewegbaren Wand mindestens eine Öffnung (28a, 28b) für das Strömen eines Fluids von einer Kammer des Dämpfers (15) in eine andere abstützt,
- ein zweites Element (31), das in der Länge und gegen die Innenwand des ersten hohlen Elements (28) angeordnet ist, bezüglich des ersten hohlen Elements (28) bewegbar montiert ist, um mindestens eine Axialdrehung und/oder eine Axialtranslation entlang der Achse der Stange des Kolbens (18) und der beiden Elemente (28, 31) des Ventils zu ermöglichen, und wobei eine Verlängerung desselben in einer der Kammern des Dämpfers (15) zumindest einen Teil der bewegbaren Wand des Kolbens (18) ausbildet und mindestens eine bewegbare Öffnung (31a, 31b) aufweist, um das Strömen eines Fluids von einer Kammer des Dämpfers (15) in eine andere zu steuern,
so dass ein Gleiten der Verlängerung des zweiten Elements (31) des Ventils auf der Verlängerung des ersten Elements (28) des Ventils ein Ausrichten oder Verlagern der jeweiligen Öffnungen (28a, 28b, 31a, 31b,) ermöglicht, um das Strömen eines Fluids von einer Kammer des Dämpfers (15) in eine andere zuzulassen, beziehungsweise um das Strömen zu blockieren.

5. Vorrichtung zum Steuern eines Federungs-Dämpfers gemäß einem der Ansprüche 1 bis 4, **dadurch gekennzeichnet, dass** mindestens ein Federelement (41) zwischen der Stütze (43) und mindestens einem Element der Betätigungsvorrichtung angeordnet ist.

6. Vorrichtung zum Steuern eines Federungs-Dämpfers gemäß Anspruch 5, **dadurch gekennzeichnet, dass** die Befestigung der Ummantelung (7) des Kabels (6) an der Stütze (43) ein Element zum Verstellen der Position des Federelements (41) einsetzt, das durch eine hohle, mit einem Gewinde versehene Stange (42) ausgebildet ist, die in einer Gewindebohrung der Stütze (43) montiert ist und von dem Kabel (6) durchquert wird, wobei ein Ende der hohlen, mit einem Gewinde versehenen Stange (42) an dem Ende des Federelements (41) abgestützt ist, dessen entgegengesetztes Ende ein Element aufnimmt, das an dem Kabel (6) befestigt ist, wobei die Position der hohlen, mit einem Gewinde versehenen Stange (42) in der Gewindebohrung verstellt werden kann, um eine Vorspannung der Kraft des Federelements (41) zu definieren, die der Spannung des Kabels (6) an dem Hebel (32) entgegenwirkt.

7. Vorrichtung zum Steuern eines Federungs-Dämpfers gemäß einem der Ansprüche 1 bis 4, **dadurch gekennzeichnet, dass** mindestens ein Federelement (41) entlang der Verkabelung (6) angeordnet ist, die den Tretkraftdetektor (13) mit mindestens einem Element der Betätigungsvorrichtung mindestens eines Federungs-Dämpfers verbindet.

8. Vorrichtung zum Steuern eines Federungs-Dämpfers gemäß Anspruch 7, **dadurch gekennzeichnet, dass** die Verkabelung (6) aus einer ersten Kabellänge (6a), die mit dem Tretkraftdetektor verbunden ist, und mindestens einer zweiten Kabellänge (6b, 6c), die mit der Betätigungsvorrichtung mindestens eines Federungs-Dämpfers verbunden ist, gebildet ist, die erste Kabellänge (6a) auf der Höhe eines Crimp-Elements (48) mit mindestens einer zweiten Kabellänge (6b, 6c) verbunden ist, das gleitend in einer Kartusche (47) gelagert ist, die mit der Ummantelung (7) der Verkabelung (6) fest montiert ist, wobei das Federelement (41) in der Kartusche (47) zwischen einem Ende der Kartusche und dem Crimp-Element (48) aufgenommen ist, um der Zugkraft des Kabels (6) an der Betätigungs vorrichtung entgegenzuwirken.

9. Vorrichtung zum Steuern eines Federungs-Dämpfers gemäß einem der Ansprüche 7 bis 8, **dadurch gekennzeichnet, dass** die an der Ummantelung (7) der Verkabelung (6) befestigte Kartusche (47) derart angeordnet ist, dass ihre Länge verstellbar, ist, um eine Vorspannung der Kraft des Federelements (41) zu definieren, die der Spannung des Kabels (6) entgegenwirkt.

10. Vorrichtung zum Steuern eines Federungs-Dämpfers gemäß einem der Ansprüche 7 bis 9, **dadurch gekennzeichnet, dass** das Crimp-Element (48) die erste Kabellänge (6a) einerseits mit einer zweiten Kabellänge (6b) zum Übertragen der Wirkung des Tretkraftdetektors auf mindestens ein Element der Betätigungsvorrichtung eines Federungs-Dämpfers, das an einem ersten Punkt des Fahrrades montiert ist, und andererseits mit einer dritten Kabellänge (6c) verbindet, um die Wirkung des Tretkraftdetektors (13) auf mindestens ein Element der Betätigungsvorrichtung eines Federungs-Dämpfers zu übertragen, das an einem zweiten Punkt des Fahrrades montiert ist.

11. Vorrichtung zum Steuern eines Federungs-Dämpfers gemäß einem der Ansprüche 8 bis 10, **dadurch gekennzeichnet, dass** die Vorrichtung mindestens zwei Federelemente (41a, 41b) aufweist, von denen jedes ein auf der Höhe des Crimp-Elements (48) gleitend befestigtes Ende ausweist, wobei
- ein erstes Federelement (41a), das als "weich" bezeichnet wird und angepasst ist, um der Zugkraft des Kabels (6) an der Betätigungsvorrichtung mit einem ersten Kompressions-Widerstandskoeffizienten entgegenzuwirken und eine Rückkehr des Kabels (6) bei Abwesenheit eines Zugs an dem Kabel (6) zu ermöglichen, derart positioniert ist, dass sein zweites Ende direkt oder indirekt an einem Ende der Kartusche (47) abgestützt ist, und wobei
- ein zweites Federelement (41b), das als "hart" bezeichnet wird und angepasst ist, um der Zugkraft des Kabels (6) an der Betätigungsvorrichtung mit einem zweiten Kompresions-Widerstandskoeffizienten entgegenzuwirken, derart positioniert ist, dass sein zweites Ende frei ist und direkt oder indirekt an einem Ende der Kartusche (47) abgestützt ist, wenn das Kabel (6) einer Zugkraft unterworfen wird.

12. Vorrichtung zum Steuern eines Federungs-Dämpfers gemäß einem der Ansprüche 9 bis 11, **dadurch gekennzeichnet, dass** die Kartusche aus einer ersten Halbkartusche (47b) gebildet ist, die in eine zweite Halbkartusche (47a) eingesetzt ist, die Vorrichtung ein Element (49) zum Führen mindestens einer Kugel (51) aufweist, die in einem Hohlraum (49b) einer Seite des Führungselements (49) aufgenommen, ist, wobei das Führungselement drehfest und in Translation gleitend mit einer ersten Halbkartusche (47b) entlang der Achse der Kartusche (47) und drehbewegbar mit der zweiten Halbkartusche (47a) montiert ist, so dass das Führungselement (49), das von mindestens einem Federelement (41) gegen das innere Ende der zweiten Halbkartusche (47a) auf Ebene der Seite, die der die Kugel (51) integrierenden Seite gegenüberliegt, mit Druck beaufschlagt wird, mit der zweiten Halbkartusche (47a) translationsfest auf der Höhe mindestens einer Kugel (51) gehalten wird, die nacheinander in einer Bohrung (52) aus einer kreisförmig am inneren Ende der Halbkartusche (47a) angeordneten Mehrzahl von Bohrungen positioniert wird, wenn eine Vorspannung mittels Drehens einer (47a) der Halbkartuschen bezüglich der anderen (47b) verstellt wird.

13. Vorrichtung zum Steuern eines Federungs-Dämpfers gemäß einem der Ansprüche 1 bis 10, **dadurch gekennzeichnet, dass** eine Torsionsfeder (34) an der Federungs-Dämpfungsvorrichtung (5) positioniert ist, wobei mindestens eines ihrer Enden (34a) gegen einen Vorsprung (32a) des Hebels (32) montiert ist, um der Zugkraft des Kabels (6) an dem Hebel (32) entgegenzuwirken und dem Hebel (32) zu ermöglichen, in eine Position zurückzugelangen, die auf der Höhe des Kolbens (18) das Strömen eines Fluids von einer Kammer in eine andere zulässt.

14. Vorrichtung zum Steuern eines Federungs-Dämpfers gemäß Anspruch 13, **dadurch gekennzeichnet, dass** die Torsionsfeder (34) um das Ende des zweiten Elements (31) des Ventils gewickelt montiert ist, das über das erste Element (8) des Ventils und der Stange (23) des Kolbens (18) hinausragt ein erstes Ende (34a) der Feder (34), das mit dem Hebel (32) bewegbar ist, gegen einen Vorsprung (32a) des Hebels (32) positioniert ist, und das zweite Ende (34b), das bezüglich der Struktur der Federungs-Dämpfungsvorrichtung (5) fest ist, gegen eine Stütze (35), die von der Struktur des Dämpfers gebildet wird, angeordnet und/oder geklemmt und/oder befestigt ist.

15. Vorrichtung zum Steuern eines Federungs-Dämpfers gemäß Anspruch 14, **dadurch gekennzeichnet, dass** das zweite feste Ende (34b) der Torsionsfeder (34) an einem verstellbaren Element abgestützt ist, das durch eine Vorspannschraube (35) ausgebildet ist, die in der Gewindebohrung- einer Stütze angeordnet ist, die an der Struktur der Dämpfungsvorrichtung (5) montiert ist, und wobei ein Ende der Vorspannschraube (35) einen verstellbaren Anschlag ausbildet, um die Kraft der Torsionsfeder (34), die der Spannung des Kabels (6) an dem Hebel (32) entgegenwirkt, zu definieren.

16. Vorrichtung zum Steuern eines Federungs-Dämpfers gemäß einem der Ansprüche 1 bis 13, **dadurch gekennzeichnet, dass** die bewegbare Wand des Kolbens (18) mindestens zwei übereinanderliegende Ebenen aufweist, wobei eine erste Ebene mindestens eine Öffnung aufweist, die mindestens einer Ventilklappe zugeordnet ist, die druckentlastet (20) und/oder druckbelastet (19) montiert ist, um jeweils die Druckentlastungs" und/oder Druckbelastungsphasen des Dämpfers zu steuern, und wobei eine zweite Ebene mindestens eine Öffnung (28a, 31a) aufweist, deren Fluid-Durchgang von dem ersten (28) und dem zweiten (31) Element des Ventils gesteuert wird.

17. Vorrichtung zum Steuern eines Federungs-Dämpfers gemäß einem der Ansprüche 5 bis 14, **dadurch gekennzeichnet, dass** der Arbeitsweg des Hebels (32) ein Drehen in einer Ebene ist, die im Wesentlichen senkrecht zu der Achse der Stange (23) des Kolbens (18): und der Elemente (28, 31) des Ventils und um einen Drehpunkt ist, an dem der Hebel (32) befestigt ist, der von dem zweiten Element (31) des Ventils gebildet wird, wobei der Arbeitsweg durch, mindestens einen verstellbar an einem Element der Struktur der Dämpfungsvorrichtung (5) montierten Anschlag (35, 36) beschränkt ist, der eine Maximal- und/oder Minimal-Arbeitsweg-Schwelle definiert, die jeweils einer "Kabel-1-(6)-Maximalspannungs'-Position und/oder einer "Kabel-(6)-Minimalspannungs"-Position entspricht.

18. Vorrichtung zum Steuern eines Federungs-Dämpfers gemäß einem der Ansprüche 5 bis 14, **dadurch gekennzeichnet, dass** der Arbeitsweg des Hebels ein Drehen in einer Ebene ist, die im Wesentlichen parallel zu der Achse der Stange (23) des Kolbens (18) und der Elemente (28, 31) des Ventils ist, wobei der Drehpunkt des Hebels mit dem zweiten Element (31) des Ventils durch eine Umlenkvorrichtung gelenkig gelagert ist und der Arbeitsweg durch mindestens einen verstellbar an einem Element der Struktur der Dämpfungsvorrichtung (5) montierten Anschlag beschränkt ist, der eine Maximal" und/oder Minimal-Arbeitsweg-Schwelle definiert, die jeweils einer "Kabel-(6)- Maximalspannungs"-Position und/oder einer "Kabel-(6)-Minimalspannungs"-Position entspricht.

19. Vorrichtung zum Steuern eines Federungs-Dämpfers gemäß einem der Ansprüche 5 bis 14, **dadurch gekennzeichnet, dass** der Arbeitsweg des Hebels ein Drehen in einer Ebene ist, die im Wesentlichen parallel zu der Achse der Stange (23) des Kolbens (18) und der Elemente (28, 31) des Ventils ist, und dass, da das Ende des zweiten Elements (31) des Ventils bewegbar am Hebel befestigt ist, das Kabel (6) an dem Hebel auf der Höhe eines Befestigungspunktes befestigt ist, der bezüglich der Translationsachse des zweiten Elements (31) des Ventils versetzt ist, so dass das Kabel (6) nicht mit der Achse der Elemente des Ventils fluchtet, wobei das Kabel (6) und das zweite Element des Ventils in entgegengesetzten Richtungen auf beiden Seiten des Hebels ausgerichtet sind.

20. Vorrichtung zum Steuern eines Federungs-Dämpfers gemäß einem der Ansprüche 5 bis 14 oder 17, **dadurch gekennzeichnet, dass**, da das zweite Element (31) in Axialtranslation bewegbar ist, eine Scheibenfeder oder eine Tellerfeder an der Seite des Kolbens (18), die der Stange (23) gegenüberliegt, montiert ist, so dass das Ende des zweiten bewegbaren Elements (31) des Ventils in der Mitte der Scheibenfeder befestigt ist, und dass ein Druck auf die Scheibenfeder eine Gegenkraft zu der Spannkraft des Kabels (6) an dem Hebel erzeugt.

21. Vorrichtung zum Steuern eines Federungs-Dämpfers gemäß einem der Ansprüche 5 bis 18, **dadurch gekennzeichnet, dass** das Kabel (6) des Detektors (13), das auf der Höhe der Federungs-Dämpfungsvorrichtung (5) aus seiner Ummantelung (7) ausmündet, um an einem Ende des Hebels (32) befestigt zu werden, außerhalb der Dämpfungsvorrichtung (5) verlängert ist, um in eine weitere Ummantelung (46) eingeführt zu werden und an eine zweite Federungs-Dämpfungsvorrichtung (2) des Fahrrades angefügt zu werden, wobei die Enden der Ummantelungen (7, 46) auf der Höhe der Federungs-Dämpfungsvorrichtungen (2, 5) von hohlen, mit einem Gewinde versehenen Stangen (42, 45) in Position gehalten werden.
